# EUROPEAN PATENT SPECIFICATION

(11) **EP 2 818 703 B1**
(45) Date of publication and mention of the grant of the patent: **28.03.2018**
(21) Application number: 13751616.7
(22) Date of filing: 19.02.2013
(51) Int. Cl.: B63B 21/50, B63B 27/10, B63B 35/00, F03D 13/10, F03D 13/25, F03D 13/40

(54) **SHIP FOR INSTALLING OFFSHORE WIND TURBINE AND METHOD FOR INSTALLING OFFSHORE WIND TURBINE**
SCHIFF ZUR INSTALLATION VON OFFSHORE-WINDKRAFTANLAGEN UND VERFAHREN ZUR INSTALLATION VON OFFSHORE-WINDKRAFTANLAGEN
NAVIRE POUR L'INSTALLATION DE TURBINE ÉOLIENNE OFFSHORE ET PROCÉDÉ D'INSTALLATION DE TURBINE ÉOLIENNE OFFSHORE

(30) Priority: 20.02.2012 JP 2012034115
(43) Date of publication of application: 31.12.2014
(73) Proprietor: Mitsubishi Heavy Industries, Ltd., Tokyo 108-8215 (JP)
(72) Inventor: SAWAI, Takayuki, Tokyo 108-8215 (JP); KUMAMOTO, Hitoshi, Tokyo 108-8215 (JP); KOMATSU, Masao, Tokyo 108-8215 (JP); WATANABE, Tomonori, Tokyo 108-8215 (JP)
(74) Representative: Intès, Didier Gérard André
(86) International application number: PCT/JP2013/054032
(87) International publication number: WO 2013/125535

(56) References cited:
- WO-A1-02/48547
- WO-A1-02/48547
- WO-A1-2012/175091
- WO-A2-2011/110818
- DE-A1-102010 015 412
- JP-A- 2005 069 025
- JP-A- 2011 112 044
- JP-A- 2011 112 045
- US-A1- 2009 028 647
- US-A1- 2010 293 781
- US-A1- 2012 219 364

## Description

### {Technical Field}

The present invention relates to a ship for installing an offshore wind turbine and a method of installing an offshore-wind-turbine.

### {Background Art}

Currently, there is a boom in building offshore wind turbines in Europe, the scale of which is expected to increase further in the future, with a trend toward a considerably increased amount of offshore installation work. Furthermore, there are plans to install wind turbines in sea areas with a great depth, where the sea areas where the wind turbines are installed are further away from the shore, and there is a trend toward increasing the size of wind turbines themselves.

A self-elevating platform provided with a jack-up apparatus and a deck crane is employed in installation work of offshore wind turbines. Wind turbine parts, such as turbine blades that are divided or partially assembled, a nacelle that contains a generator and a gearbox, a tower, and so forth, and a foundation structure that will be built from the seabed in order to install the wind turbine at an offshore location are loaded onto this self-elevating platform. Then, after the self-elevating platform is towed or transports itself under self-propulsion to a wind-turbine installation sea area, assembly work of the wind turbine is performed by employing the deck crane on the platform in a state in which the hull is raised completely above the sea surface by lowering jack-up legs of a jack-up apparatus to the seabed.

Most existing wind-turbine installing platforms are configured so that wind turbine parts for two to three wind turbines and foundation structures therefor can be loaded at once. After wind turbine parts and foundation structures are loaded onto a platform at a cargo port, the platform moves to an installation sea area and the wind turbines and the foundation structures transported by the platform are installed on the sea area, the platform subsequently returns to the cargo port again, and thus, the platform repeats transport and installation of wind turbines.

In addition, there are cases in which a self-elevating platform is permanently stationed in a wind-turbine installation sea area as a platform dedicated to the wind-turbine installation work, while another self-elevating platform is employed for transporting parts. Specifically, a plurality of wind turbine parts and foundation structures are loaded onto the parts transportation platform at a cargo port, the platform is stopped next to the permanently-stationed platform dedicated to the wind-turbine installation work, after the platform is jacked up, the wind turbine parts and the foundation structures loaded on the parts transportation platform are lifted by using the deck crane of the platform dedicated to the installation work. The installation work is performed in this state.

However, with current construction methods such as the one described above, the construction costs of offshore installation are expected to become enormous from the viewpoint of construction time required for the installation and ship costs for the platforms, and thus, there is a large demand regarding cost reduction and improvement thereof.

The demands associated with the construction time required for the installation include the following: an increase in navigation time from a cargo port to the installation sea area, because the distance from the shore to an installation sea area of a wind turbine will be greater than the current level; an increase in the time required to lower and raise a platform by using a jack-up apparatus, because the water depth of the installation sea area will be even greater than the current level; and, additionally, a decrease in work efficiency from a time aspect, because the number of wind turbines that can be transported at the same time by using equipment that is currently in use have to be decreased with an increase in the size of the wind turbines.

The demands associated with ship costs for the platforms include an increase in the ship price of the platforms due to an increased demand for work platforms caused by an increase in the amount of construction work and due to an increase in the platform size, as well as the capacities of a jack-up apparatus and a deck crane, associated with an increase in the size of wind turbines to be employed.

On the other hand, Patent Literature 1 mentioned below discloses a method of installing an offshore wind turbine in which a floating structure is employed as a foundation of the wind turbine, the floating structure is towed to an installation sea area, and the floating structure is made to sink and settle in the sea. Because the wind turbine is installed by transporting the wind turbine to the installation sea area in an assembled state in this way, there is an advantage in which no assembly work is required at the installation location.

### {Citation List}

### {Patent Literature}

{PTL 1} Japanese Unexamined Patent Application, Publication No. 2005-69025

### {Summary of Invention}

### {Technical Problem}

However, with Patent Literature 1, when installing a wind turbine, it is necessary to sink a floating structure in the sea while supporting the wind turbine and maintaining the position thereof using a crane ship, thus involving difficult work. In addition, because it is necessary to employ a crane ship in addition to a tugboat, it is difficult to achieve a cost reduction.

In addition, when performing so-called assembled wind turbine installation, in which a wind turbine is installed by transporting an assembled wind turbine to an installation sea area by means of a ship, it is conceivable to employ a crane that transfers the wind turbine by suspending the entire assembled wind turbine from above. However, with such a crane, work is inevitably interrupted during strong winds due to the danger associated with swaying of the crane suspending the wind turbine, thus increasing the work period and costs.

WO 0248547 (A1) discloses a method for placing at least one windmill on open water, wherein the windmill is built up at least for the greater part on or near land and is supported in a stage.
WO2011110818 (A2) describes an apparatus for allowing for transport of a wind turbine structure comprising a clamp. US2010293781 (A1) discloses further methods for offshore wind turbine installation.

DE102010015412 (A1) discloses a method of mounting a wind-power plant at the provided mounting position at an embark point. A completely mounted wind-power plant is received and moved from the mounting position to a transport position on a barge with the help of a displaceable movable crane, particularly a crawler crane.

The present invention has been made in light of the above-described circumstances, and an object thereof is to provide an offshore-wind-turbine installing ship and an offshore-wind-turbine installing method with which a wind turbine can be installed with simple work in the case in which a wind turbine in an assembled state is transported to and installed in an installation sea area.

### {Solution to Problem}

The invention relates to an offshore-wind-turbine installing ship according to claim 1 and an offshore-wind-turbine installing method according to claim 5.

In order to solve the above-described problems, the present disclosure employs the following solutions.

A support rack according to a first aspect of the present disclosure is a support rack for transporting a wind turbine made by assembling a tower, a nacelle, and turbine blades or a wind turbine made by assembling a tower and a nacelle to a wind-turbine installation sea area in a state in which the wind turbine is accommodated in the support rack, and for installing the wind turbine on a foundation installed in the wind-turbine installation sea area, the support rack comprising a wind-turbine supporting structure that comprises: an overturning prevention support which supports an outer circumferential surface of the tower to prevent the wind turbine from overturning; and a bottom-portion support which supports a flange provided in the accommodated tower so as to receive the weight of the wind turbine from the bottom side thereof.

With the support rack according to the first aspect of the present disclosure, so-called assembled wind turbine installation is performed, in which a wind turbine in which a tower, a nacelle, and turbine blades are already assembled or a wind turbine in which a tower and a nacelle are already assembled is transported to and installed in a wind-turbine installation sea area in that state.

By doing so, it is possible to omit the assembly work of the wind turbine at the installation sea area.

In addition, the wind turbine in which the tower, the nacelle, and the turbine blades are assembled or the wind turbine in which the tower and the nacelle are assembled is suspended via the support rack.

By doing so, it is possible to prevent the wind turbine from being damaged when performing the wind-turbine loading work on land and when performing the wind-turbine installation work at the wind-turbine installation sea area.

With a second aspect of the present disclosure, it is more suitable that, in the above-described support rack, the wind-turbine supporting structure is configured so as to be capable of being removed from the wind turbine in a state in which the tower is installed in the foundation.

Upon installing the wind turbine on the foundation that is installed in the wind-turbine installation sea area in advance, the support rack of the second aspect described above is removed from the wind turbine and the support rack is retrieved.

By doing so, it is possible to repeatedly use (reuse) the retrieved support rack to transport new wind turbines that are assembled on land in advance to wind-turbine installation sea areas to install them thereat.

With a third aspect of the present disclosure, it is more suitable that, in the above-described support rack, a top-most portion of the wind-turbine supporting structure is formed so that the top-most portion extends in the vertical direction and that the top-most portion is parallel to an axis of the tower in its longitudinal direction.

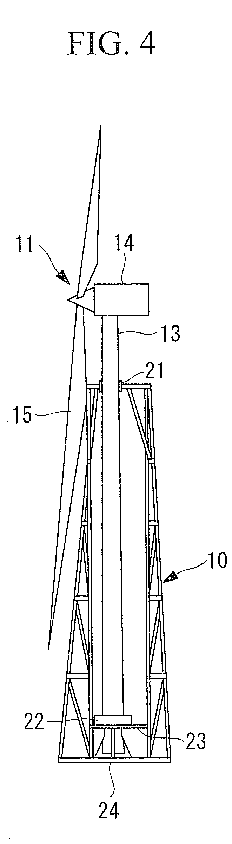

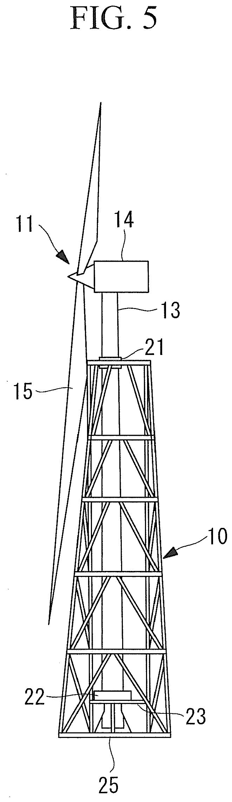

As shown in, for example, Figs. 4 and 5, with the support rack of the third aspect described above, a truss structure at the top-most portion of the support rack 10 is formed so as to extend in the vertical direction, that is, so as to be parallel to the center axis (axis in the longitudinal direction) of the tower 13.

By doing so, it is possible to prevent the turbine blade from coming into contact with the support rack, and thus, it is possible to prevent the turbine blades from being damaged.

An offshore-wind-turbine installing ship according to a fourth aspect of the present disclosure is provided with one or more mounting spaces that are provided on a deck of the ship and that allow a support rack, in which the wind turbine is accommodated, to be mounted and secured to the mounting space.

With the offshore-wind-turbine installing ship according to the fourth aspect of the present disclosure, so-called assembled wind turbine installation is performed, in which a wind turbine in which a tower, a nacelle, and turbine blades are already assembled or a wind turbine in which a tower and a nacelle are already assembled is transported to and installed in a wind-turbine installation sea area in that state.

By doing so, it is possible to omit the assembly work of the wind turbine at the installation sea area.

With a fifth aspect of the present disclosure, it is more suitable that, in the offshore-wind-turbine installing ship described above, the mounting spaces are arranged in a bow-to-stern direction on a first side of the ship, an on-board crane is disposed on the deck between a first one of the mounting spaces and a second one of the mounting spaces, and the on-board crane is disposed on a second side of the ship.

With the offshore-wind-turbine installing ship of the fifth aspect described above, it is possible to effectively utilize the space on the deck, it is possible to reduce the deck area, and it is possible to achieve size reduction of the offshore-wind-turbine installing ship.

With a sixth aspect of the present disclosure, it is more suitable that, in the offshore-wind-turbine installing ship described above, the mounting spaces are arranged so that a center of the wind-turbine supporting structure is positioned on a turning radius area of the on-board crane.

With the offshore-wind-turbine installing ship of the sixth aspect described above, it is possible to more effectively utilize the space on the deck, it is possible to further reduce the deck area, and it is possible to achieve further size reduction of the offshore-wind-turbine installing ship.

With a seventh aspect of the present disclosure, it is more suitable that, in the offshore-wind-turbine installing ship described above, the ship is configured as a jack-up ship that is provided with a jack-up apparatus having a plurality of jack-up legs which are lowered to a seabed to secure footings of the ship at an offshore location, and at least one of the jack-up legs is disposed on a turning-center position of the on-board crane.

With the offshore-wind-turbine installing ship of the seventh aspect described above, it is possible to more effectively utilize the space on the deck, it is possible to further reduce the deck area, and it is possible to achieve further size reduction of the offshore-wind-turbine installing ship.

An offshore-wind-turbine installing method according to an eighth aspect of the present disclosure includes transporting a wind turbine in which a tower, a nacelle, and turbine blades are assembled, or a wind turbine in which a tower and a nacelle are assembled, to a wind-turbine installation sea area in a state in which the wind turbine is accommodated in a support rack; moving the wind turbine and the support rack toward a foundation installed in the wind-turbine installation sea area; securing a bottom end of the tower to a top end of the foundation; and separating the support rack from the wind turbine in the state in which the bottom end of the tower is installed in the top end of the foundation to retrieve the support rack.

With the offshore-wind-turbine installing method according to the eighth aspect of the present disclosure, so-called assembled wind turbine installation is performed, in which a wind turbine in which a tower, a nacelle, and turbine blades are already assembled or a wind turbine in which a tower and a nacelle are already assembled is transported to and installed in a wind-turbine installation sea area in that state.

By doing so, it is possible to omit the assembly work of the wind turbine at the installation sea area.

### {Advantageous Effects of Invention}

With an offshore-wind-turbine installing ship and an offshore-wind-turbine installing method according to the present invention, so-called assembled wind turbine installation is performed, in which a wind turbine in which a tower, a nacelle, and turbine blades are already assembled or a wind turbine in which a tower and a nacelle are already assembled is transported to and installed in a wind-turbine installation sea area in that state, and, by doing so, an advantage of making it possible to omit the assembly work of the wind turbine at the installation sea area.

### {Brief Description of Drawings}

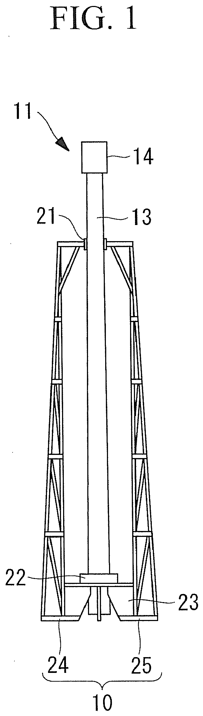

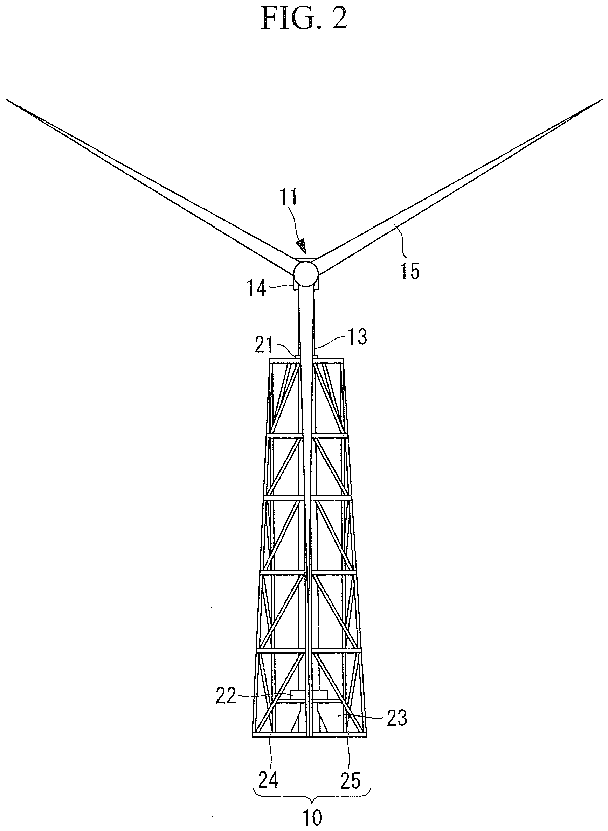

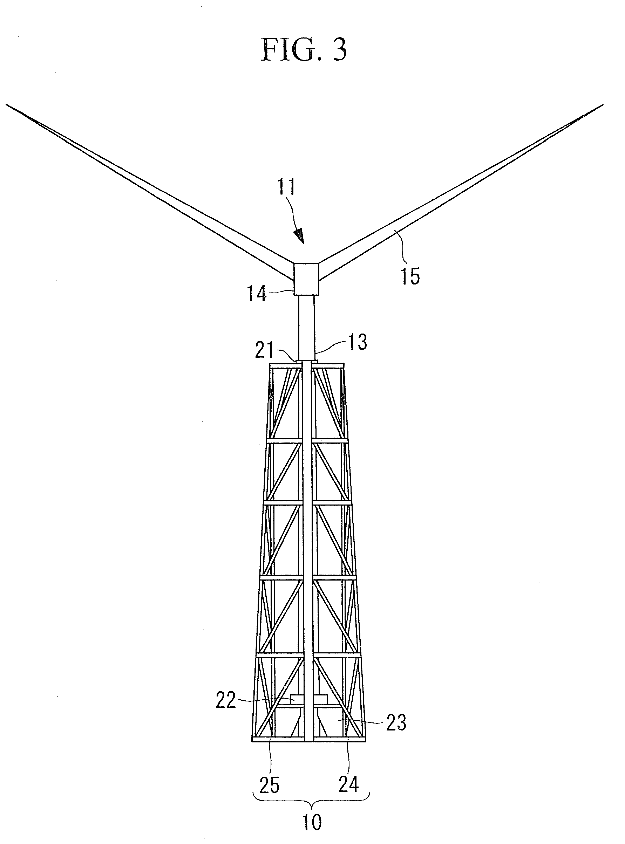

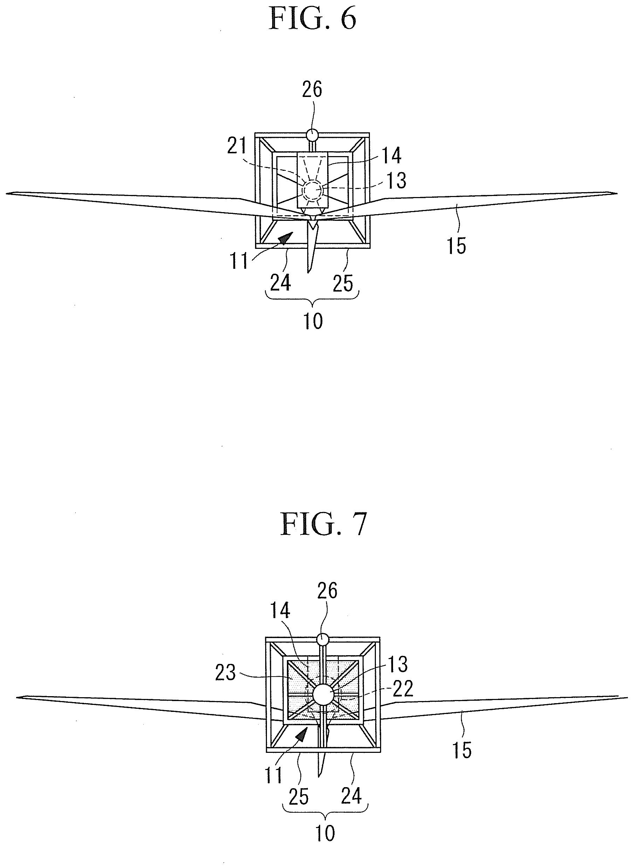

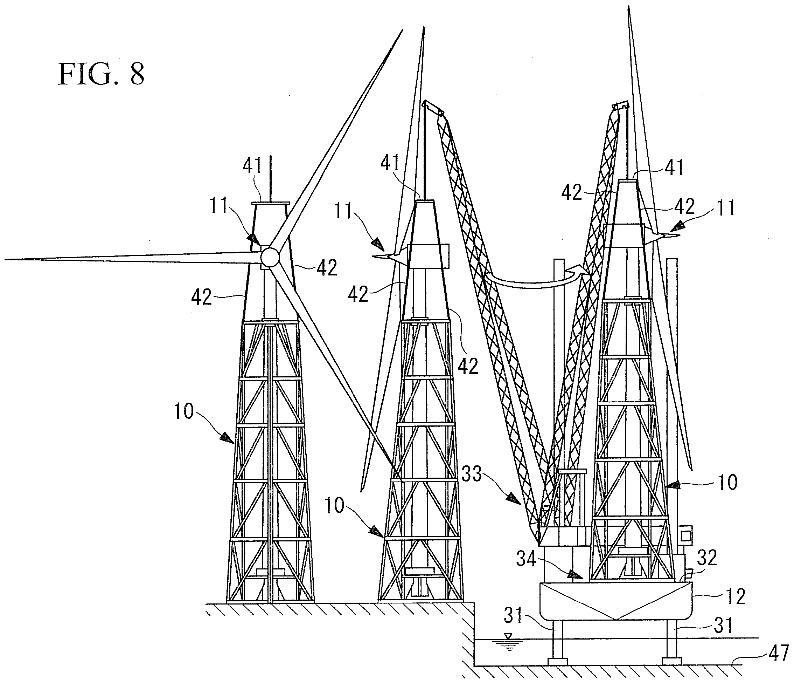

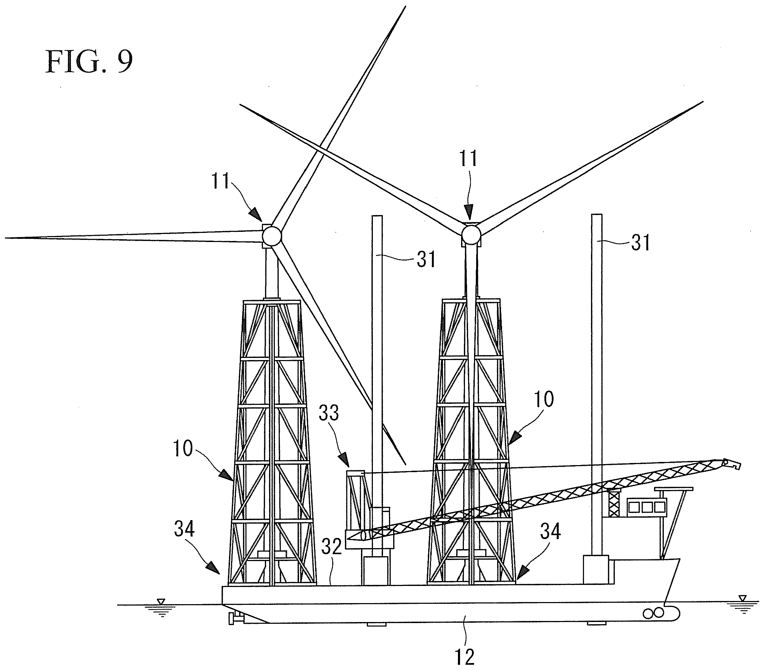

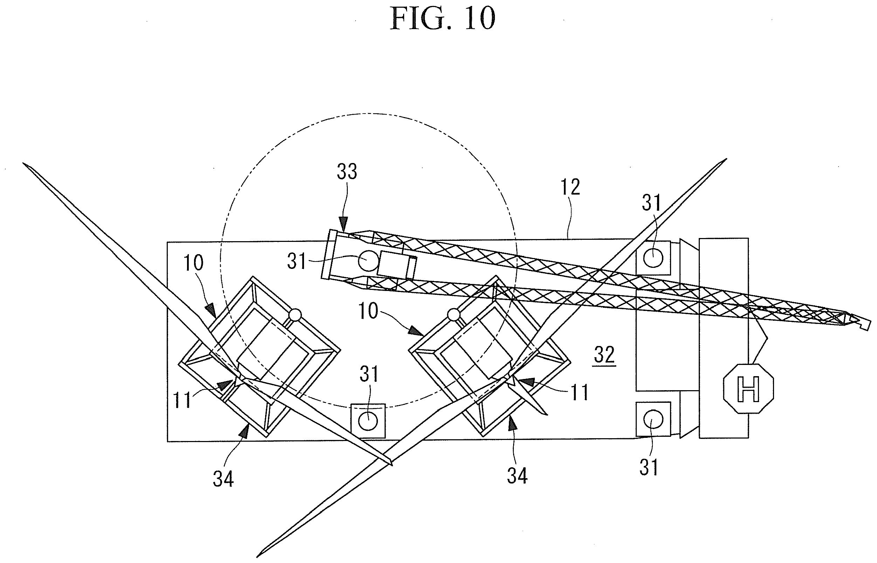

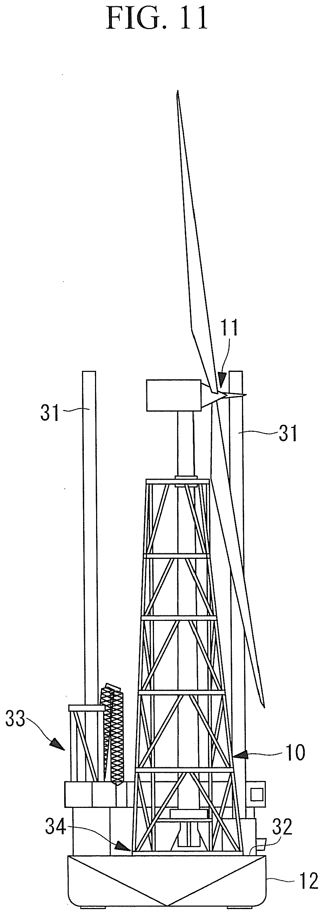

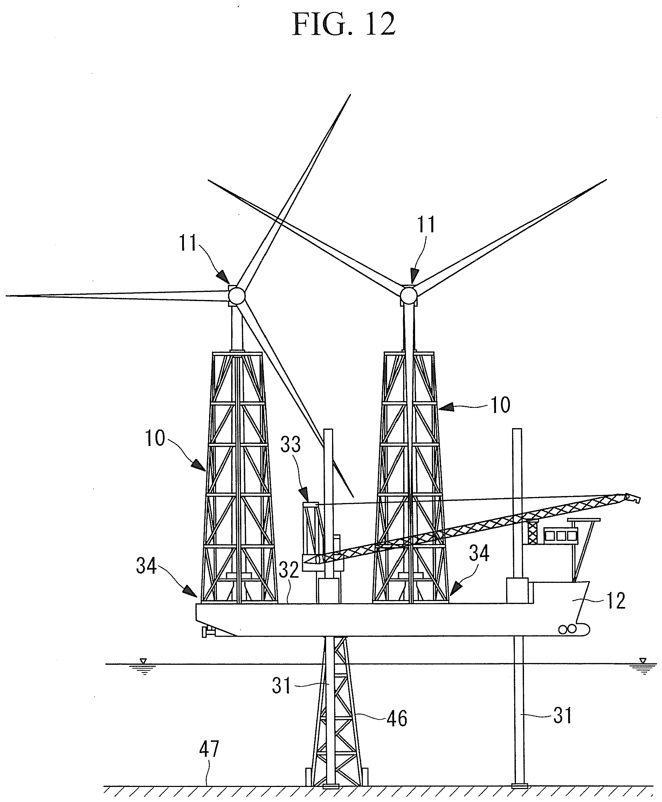

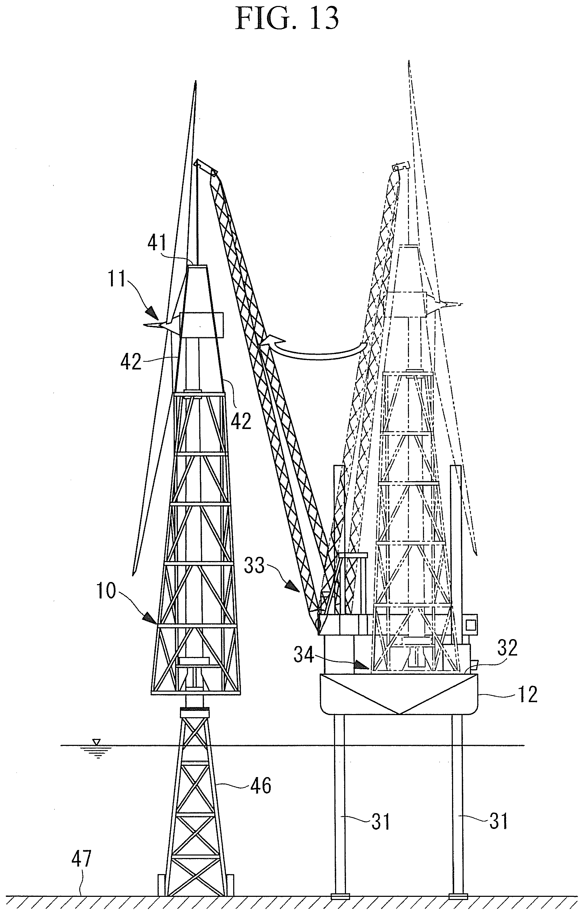

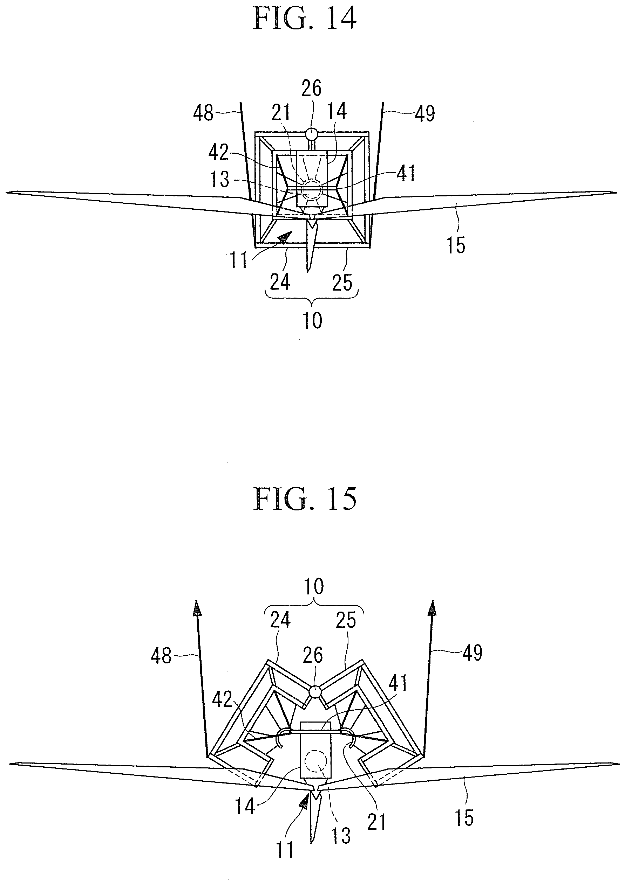

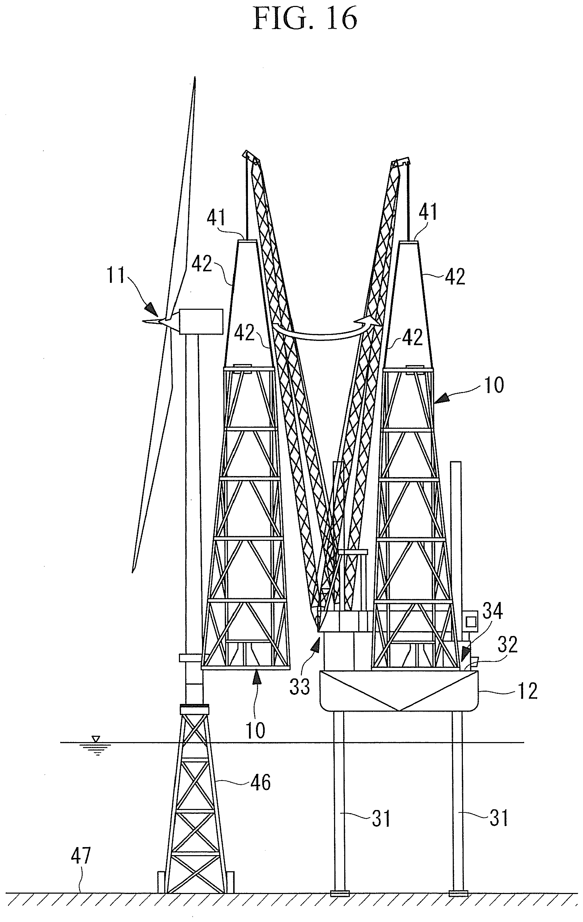

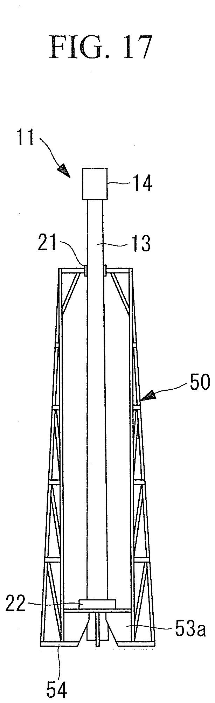

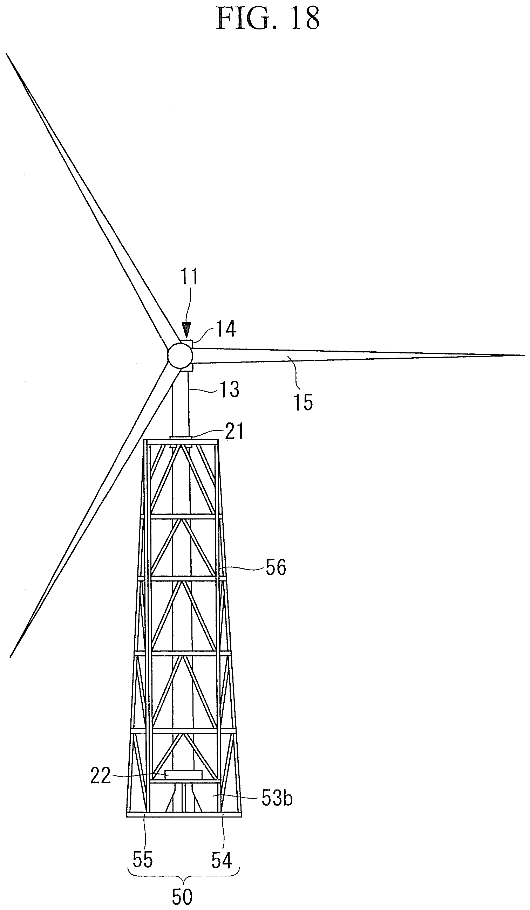

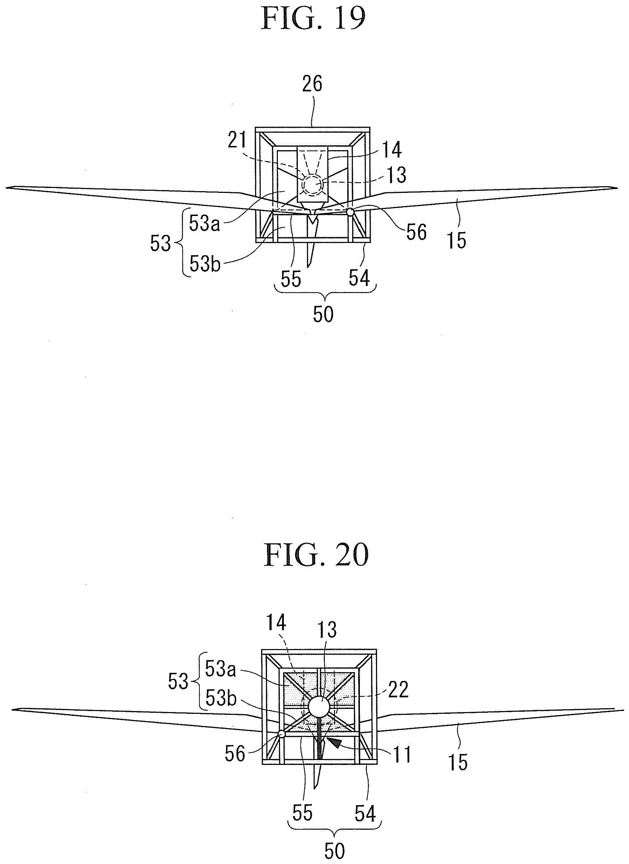

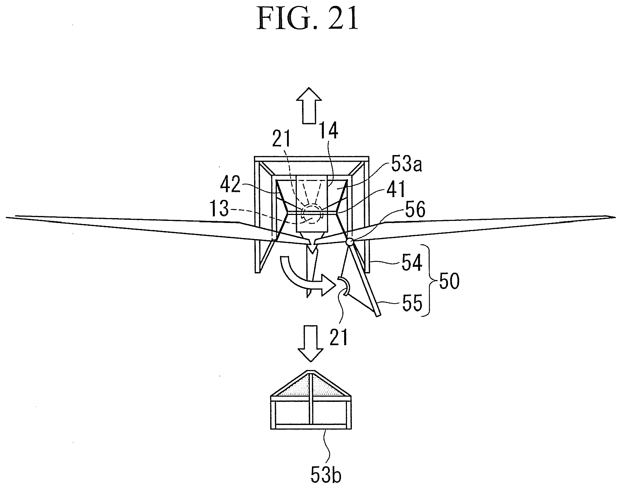

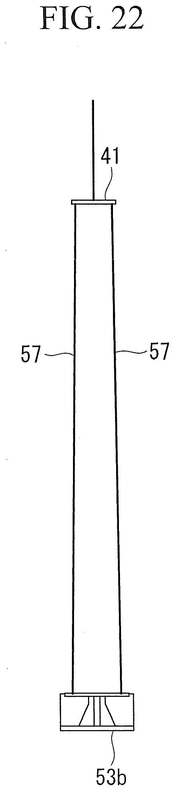

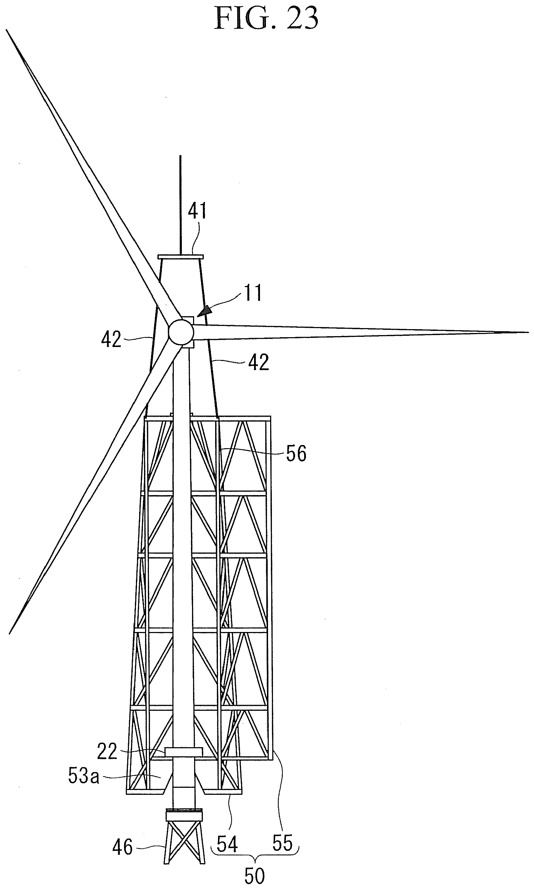

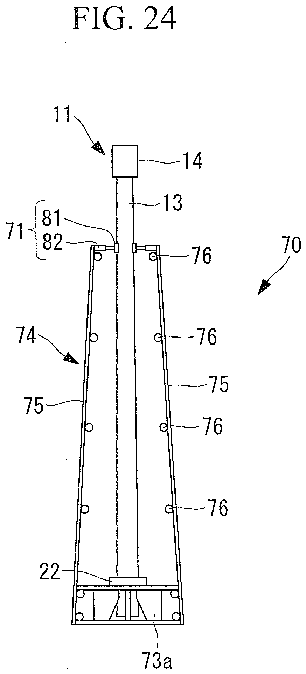

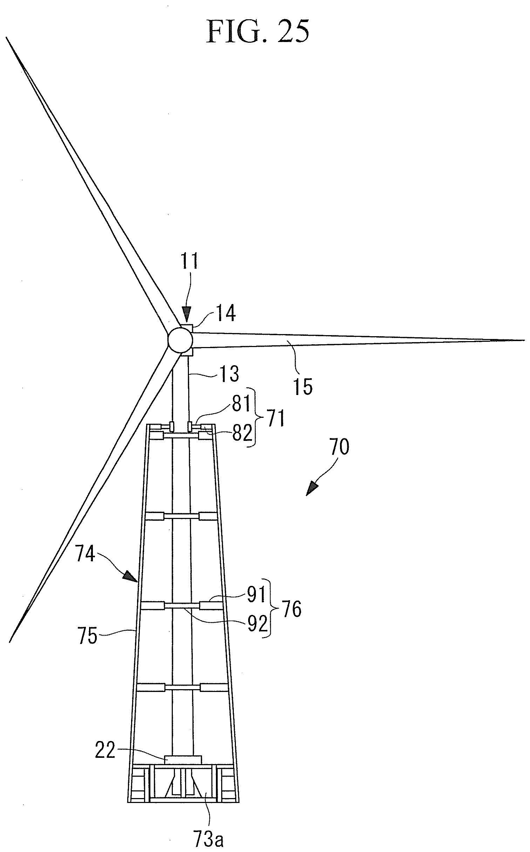

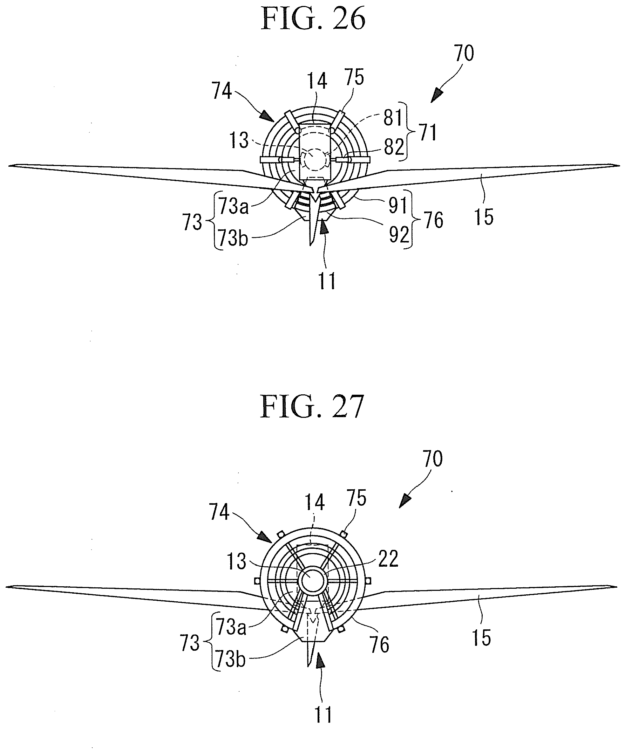

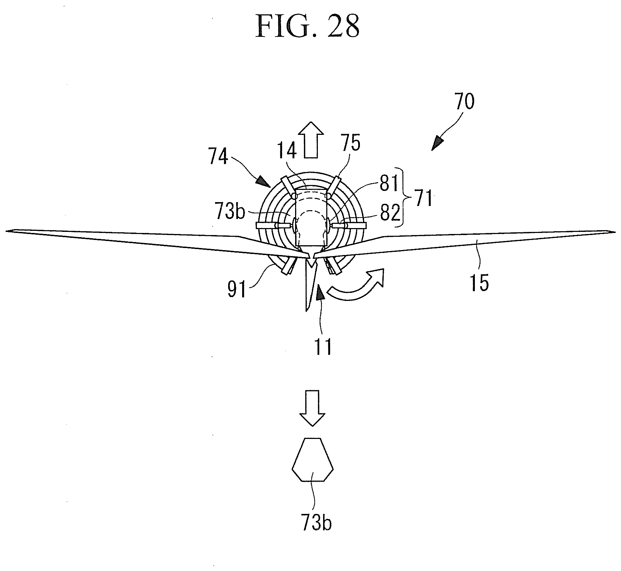

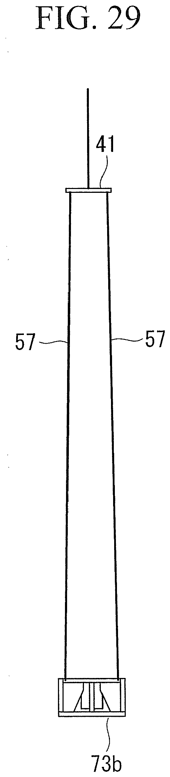

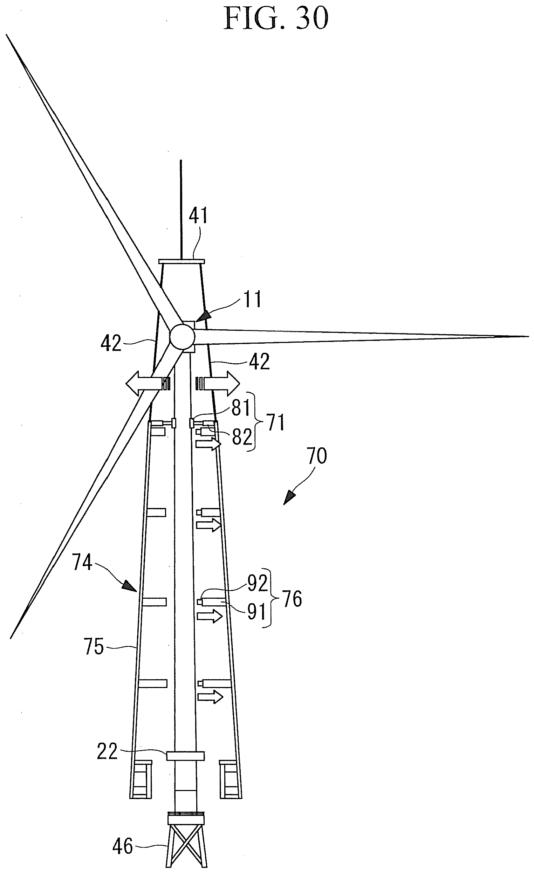

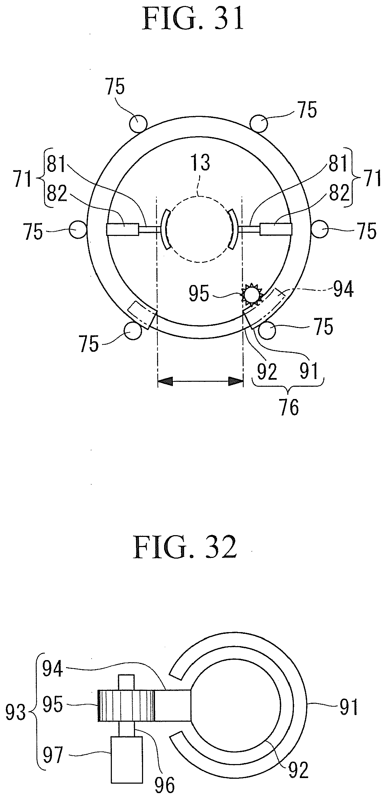

{Fig. 1} Fig. 1 is a diagram showing, as viewed from the front, a state in which a wind turbine is accommodated in a support rack according to a first embodiment of the present invention, and a view taken along a plane that includes a centerline (axis in the longitudinal direction) of the support rack and a centerline (axis in the longitudinal direction) of the wind turbine.
{Fig. 2} Fig. 2 is a front view showing the state in which the wind turbine is accommodated in the support rack according to the first embodiment of the present invention.
{Fig. 3} Fig. 3 is a rear view showing the state in which the wind turbine is accommodated in the support rack according to the first embodiment of the present invention.
{Fig. 4} Fig. 4 is a diagram showing, as viewed from a right side, the state in which the wind turbine is accommodated in the support rack according to the first embodiment of the present invention, and a view taken along the plane that includes the centerline of the support rack and the centerline of the wind turbine.
{Fig. 5} Fig. 5 is a right side view showing the state in which the wind turbine is accommodated in the support rack according to the first embodiment of the present invention.
{Fig. 6} Fig. 6 is a diagram showing, as viewed from above, the state in which the wind turbine is accommodated in the support rack according to the first embodiment of the present invention.
{Fig. 7} Fig. 7 is a diagram showing, as viewed from below, the state in which the wind turbine is accommodated in the support rack according to the first embodiment of the present invention.
{Fig. 8} Fig. 8 is a diagram showing a process of loading the support rack, in which the wind turbine is accommodated in the interior thereof, onto an offshore-wind-turbine installing ship from the land side.
{Fig. 9} Fig. 9 is a right side view of the offshore-wind-turbine installing ship onto which the support rack and the wind turbine have been loaded from the land side and which is in the transportation process to a wind-turbine installation sea area.
{Fig. 10} Fig. 10 is a diagram showing, as viewed from above, the offshore-wind-turbine installing ship shown in Fig. 9.
{Fig. 11} Fig. 11 is a diagram showing, as viewed from the rear, the off-shore-wind-turbine installing ship shown in Fig. 9.
{Fig. 12} Fig. 12 is a right side view showing the offshore-wind-turbine installing ship that has arrived at the wind-turbine installation sea area, whose position is set, and whose footings are secured with jack-up legs lowered to the seabed.
{Fig. 13} Fig. 13 is a diagram showing, as viewed from the rear, the offshore-wind-turbine installing ship that has moved the wind turbine accommodated in the support rack toward a foundation by using an on-board crane and that is in the process of securing a bottom end of a wind-turbine tower to the top end of the foundation.
{Fig. 14} Fig. 14 is a diagram for explaining a retrieval work of the support rack according to the first embodiment of the present invention, and is a diagram showing the support rack and the wind turbine as viewed from above.
{Fig. 15} Fig. 15 is a diagram for explaining the retrieval work of the support rack according to the first embodiment of the present invention, and is a diagram showing the support rack and the wind turbine as viewed from above.
{Fig. 16} Fig. 16 is a diagram showing, as viewed from the rear, the offshore-wind-turbine installing ship that is moving the support rack toward the offshore-wind-turbine installing ship by using the on-board crane and that is in the process of retrieving the support rack onto a deck.
{Fig. 17} Fig. 17 is a diagram showing, as viewed from the front, a state in which a wind turbine is accommodated in a support rack according to a second embodiment of the present invention, and a view taken along a plane that includes a centerline of the support rack and a centerline of the wind turbine.
{Fig. 18} Fig. 18 is a front view showing the state in which the wind turbine is accommodated in the support rack according to the second embodiment of the present invention.
{Fig. 19} Fig. 19 is a diagram showing, as viewed from above, the state in which the wind turbine is accommodated in the support rack according to the second embodiment of the present invention.
{Fig. 20} Fig. 20 is a diagram showing, as viewed from below, the state in which the wind turbine is accommodated in the support rack according to the second embodiment of the present invention.
{Fig. 21} Fig. 21 is a diagram for explaining a retrieval work of the support rack according to the second embodiment of the present invention, and is a diagram showing the support rack and the wind turbine as viewed from above.
{Fig. 22} Fig. 22 is a diagram for explaining a step in which an attachable/detachable portion of a bottom-portion support according to the second embodiment of the present invention is retrieved, and is a diagram showing the attachable/detachable portion of the bottom-portion support as viewed from the front.
{Fig. 23} Fig. 23 is a diagram for explaining the retrieval work of the support rack according to the second embodiment of the present invention, and is a diagram showing the support rack and the wind turbine as viewed from the front.
{Fig. 24} Fig. 24 is a diagram showing, as viewed from the front, a state in which a wind turbine is accommodated in a support rack according to a third embodiment of the present invention, and a view taken along a plane that includes a centerline of the support rack and a centerline of the wind turbine.
{Fig. 25} Fig. 25 is a front view showing the state in which the wind turbine is accommodated in the support rack according to the third embodiment of the present invention.
{Fig. 26} Fig. 26 is a diagram showing, as viewed from above, the state in which the wind turbine is accommodated in the support rack according to the third embodiment of the present invention.
{Fig. 27} Fig. 27 is a diagram showing, as viewed from below, the state in which the wind turbine is accommodated in the support rack according to the third embodiment of the present invention.
{Fig. 28} Fig. 28 is a diagram for explaining a retrieval work of the support rack according to the third embodiment of the present invention, and is a diagram showing the support rack and the wind turbine as viewed from above.
{Fig. 29} Fig. 29 is a diagram for explaining a step in which an attachable/detachable portion of a bottom-portion support according to the third embodiment of the present invention is retrieved, and is a diagram showing the attachable/detachable portion of the bottom-portion support as viewed from the front.
{Fig. 30} Fig. 30 is a diagram for explaining the retrieval work of the support rack according to the third embodiment of the present invention, and is a diagram showing the support rack and the wind turbine as viewed from the front.
{Fig. 31} Fig. 31 is a diagram for explaining details of an overturning prevention support and a ring-like member according to the third embodiment of the present invention, and is a diagram showing the overturning prevention support and the ring-like member as viewed from above.
{Fig. 32} Fig. 32 is a diagram for explaining details of a driving mechanism according to the third embodiment of the present invention, and is a sectional view taken along a plane that perpendicularly intersects a centerline (axis in the longitudinal direction) of the ring-like member.

### {Description of Embodiments}

Embodiments according to the present invention will be described below with reference to the drawings.

### {First Embodiment}

A first embodiment of the present invention will be described below with reference to Figs. 1 to 16.

Fig. 1 is a diagram showing, as viewed from the front, a state in which a wind turbine is accommodated in a support rack according to this embodiment, and a view taken along a plane that includes a centerline (axis in the longitudinal direction) of the support rack and a centerline (axis in the longitudinal direction) of the wind turbine, Fig. 2 is a front view showing the state in which the wind turbine is accommodated in the support rack according to this embodiment, Fig. 3 is a rear view showing the state in which the wind turbine is accommodated in the support rack according to this embodiment, Fig. 4 is a diagram showing, as viewed from a right side, the state in which the wind turbine is accommodated in the support rack according to this embodiment, and a view taken along the plane that includes the centerline of the support rack and the centerline of the wind turbine, Fig. 5 is a right side view showing the state in which the wind turbine is accommodated in the support rack according to this embodiment, Fig. 6 is a diagram showing, as viewed from above, the state in which the wind turbine is accommodated in the support rack according to this embodiment, Fig. 7 is a diagram showing, as viewed from below, the state in which the wind turbine is accommodated in the support rack according to this embodiment, Fig. 8 is a diagram showing a process of loading the support rack, in which the wind turbine is accommodated in the interior thereof, onto an offshore-wind-turbine installing ship from the land side, Fig. 9 is a right side view of the offshore-wind-turbine installing ship onto which the support rack and the wind turbine have been loaded from the land side and which is in the transportation process to a wind-turbine installation sea area, Fig. 10 is a diagram showing, as viewed from above, the offshore-wind-turbine installing ship shown in Fig. 9, Fig. 11 is a diagram showing, as viewed from the rear, the off-shore-wind-turbine installing ship shown in Fig. 9, Fig. 12 is a right side view showing the offshore-wind-turbine installing ship that has arrived at the wind-turbine installation sea area, whose position is set, and whose footings are secured with jack-up legs lowered to the seabed, Fig. 13 is a diagram showing, as viewed from the rear, the offshore-wind-turbine installing ship that has moved the wind turbine accommodated in the support rack toward a foundation by using an on-board crane and that is in the process of securing a bottom end of a wind-turbine tower to the top end of the foundation, Fig. 14 is a diagram for explaining a retrieval work of the support rack according to this embodiment, and is a diagram showing the support rack and the wind turbine as viewed from above, Fig. 15 is a diagram for explaining the retrieval work of the support rack according to this embodiment, and is a diagram showing the support rack and the wind turbine as viewed from above, and Fig. 16 is a diagram showing, as viewed from the rear, the offshore-wind-turbine installing ship that is moving the support rack toward the offshore-wind-turbine installing ship by using the on-board crane and that is in the process of retrieving the support rack onto a deck.

An offshore-wind-turbine installing ship 12 that is provided with a support rack 10 shown in Figs. 1 to 16 (hereinafter, simply referred to as "ship 12") is a ship for transporting an (offshore) wind turbine 11, which is assembled on land in advance, to an (offshore) wind-turbine installation sea area in that state, and the support rack 10 that is used when installing the wind turbine 11 onto a foundation 46 (see Fig. 12, etc.), which is installed in the wind-turbine installation sea area in advance. The wind turbine 11 that is assembled in advance are mounted on the offshore-wind-turbine installing ship 12.

The support rack 10 has, at the top-most portion (apex) thereof, an overturning prevention support 21 that prevents the wind turbine 11 from overturning, for example, when transporting the wind turbine, by means of supporting from the outside a top-portion outer circumferential surface of a tower 13 of the wind turbine 11 (the wind turbine 11 in which the tower 13, a nacelle 14, and turbine blades 15 are assembled on land in advance) accommodated in the interior of the support rack 10. In addition, the support rack 10 is provided with a pair of, that is, left and right, wind-turbine supporting structures 24 and 25 that are constituted of truss structures and that have, at bottom portions thereof, a bottom-portion support 23, which receives the entire weight of the wind turbine 11 by supporting, from below, a flange 22 provided at a bottom portion of the tower 13 of the wind turbine 11 that is accommodated in the interior of the support rack 10 (i.e., by supporting a bottom surface of the flange 22). The wind-turbine supporting structure 24 positioned on a first side of the support rack 10 and the wind-turbine supporting structure 25 positioned on a second side of the support rack 10 are coupled by means of a hinge 26 that is provided at a surface that is in contact with the first side and the second side where the wind-turbine supporting structures 24 and 25 are provided and that extends in the top-to-bottom direction (height direction), and the wind-turbine supporting structure 24 and the wind-turbine supporting structure 25 are configured so that they can be opened and closed around the rotation center of the hinge 26.

In addition, as shown in Figs. 4 and 5, the truss structures at the top-most portion of the support rack 10 are formed so as to extend in the vertical direction, that is, so as to be parallel to a center axis (axis in the longitudinal direction) of the tower 13, and, by doing so, the turbine blades 15 are prevented from being damaged due to contact between the turbine blades 15 and the support rack 10.

Furthermore, on a top surface of the support rack 10 which forms a part of the truss structures, four wires 42 (see Fig. 8, etc.) that hang down from four corners of a lifting balance 41 (see Fig. 8, etc.) that is suspended from a hook (not shown) of a self-driven land crane (not shown), such as a jib crane or the like, or that of an on-board crane 33 or the like, such as a jib crane or the like, which is mounted on the deck 32 of the ship 12, are attached to eye plates (not shown) provided at four corners of the top surface of the support rack 10 by means of shackles (not shown). In addition, a stage (not shown) for performing slinging work is provided on the truss structures at the top surface of the support rack 10, which is also used when removing the wires 42 from the eye plates.

The ship 12 shown in Figs. 8 to 13 and Fig. 16 is a ship that performs so-called assembled wind turbine installation, in which the wind turbine 11 that is assembled in advance is transported to and installed in the wind-turbine installation sea area in that state, and is a jack-up ship that is provided with a jack-up apparatus (not shown) and that is capable of securing the footings of the ship at an offshore location by lowering jack-up legs 31 to a seabed 47. The on-board crane 33 that turns about the centerline of a jack-up leg 31, such as a jib crane or the like, is mounted on a deck 32 at a position that is on the port side and the stern side relative to the center of the ship 12 in the front-to-rear direction (bow-to-stern direction). In addition, on the starboard side of the deck 32, mounting spaces 34 are provided, on which two sets of the support rack 10 and the wind turbine 11 or two support racks 10 can be mounted side-by-side in the front-to-rear direction of the ship 12 and in which the support racks 10 can be secured (lashed) to the deck 32. These mounting spaces 34 are arranged so that centers of the support racks 10 are positioned on the turning radius area of the on-board crane 33, which is indicated by a two-dot chain line in Fig. 10.

Note that the "on the turning radius area" referred to here is not a radius of a turning body that turns, but indicates an area inside the maximum work radius of the turning body at the maximum suspension capacity.

In the following, with reference to Figs. 8 to 16, work procedures will be described, the procedures includes the following: mounting the wind turbine 11 that is assembled on land in advance and that is accommodated in the support rack 10 on the ship 12 from the land side; transporting the support rack 10 and the wind turbine 11 to the wind-turbine installation sea area in that state; installing the wind turbine 11 on the foundation 46 (See Fig. 12, etc.) that is installed in the wind-turbine installation sea area in advance; and retrieving the support rack 10 in which was used to accommodate the wind turbine 11 onto the ship 12.

First, a lifting balance 41 is suspended from a hook of the on-board crane 33 and four wires 42 that hang down from four corners of this lifting balance 41 are attached to eye plates that are provided at four corners of the top surface of the support rack by means of shackles. As shown in Fig. 8, the towers 13, the nacelles 14, and the turbine blades 15 are assembled on land in advance, and the wind turbines 11 that are accommodated in the support racks 10 are mounted on the mounting spaces 34 of the ship 12 by using the on-board crane 33 mounted on the deck 32 of the ship 12 or a self-driven land crane (not shown), such as a jib crane or the like. Then, the support racks 10 are secured to the deck 32 of the ship 12 by means of fixing members (not shown).

Note that the figure positioned on the left side in Fig. 8 is a figure showing, as seen from the left side, the figure positioned at the center in Fig. 8.

In addition, when mounting the wind turbine 11 accommodated in the support rack 10 on the deck 32 of the ship 12, the jack-up legs 31 of the ship 12 are in a state in which the jack-up legs 31 are lowered to the seabed 47 and the footings are secured (a state in which the ship 12 is jacked up).

Once mounting of the wind turbine 11 accommodated in the support rack 10 on the ship 12 is completed, the four wires 42 that hang down from the four corners of the lifting balance 41 that is suspended from the hook of the on-board crane 33 are removed from the eye plates provided at the four corners of the top surface of the support rack 10, and the lifting balance 41 is removed from the hook. Then, as shown in Figs. 9 to 11, the jack-up legs 31 of the ship 12 are brought into a state in which the jack-up legs 31 are withdrawn from the seabed 47 (a state in which the ship 12 is jacked down), and the ship 12 is made to navigate to the wind-turbine installation sea area by being self-driven or towed in a state in which an arm of the on-board crane 33 is secured to the hull.

As shown in Fig. 12, once the ship 12 arrives in the wind-turbine installation sea area and the position thereof is set, the jack-up apparatus of the ship 12 is actuated to lower the jack-up legs 31 to the seabed 47 and to secure the footings (thus, jacking up the ship 12).

Once jack-up work of the ship 12 is completed, the lifting balance 41 is suspended from the hook of the on-board crane 33 and the four wires 42 that hang down from the four corners of this lifting balance 41 are attached, by means of shackles, to the eye plates that are provided at the four corners of the top surface of the support rack 10 to be installed first. Then, the fixing members securing the support rack 10 to the deck 32 of the ship 12 are removed, and, as shown in Fig. 13, the wind turbine 11 accommodated in the support rack 10 is moved toward the foundation 46 by using the on-board crane 33. The position of the wind turbine 11 accommodated in the support rack 10 is set and the bottom end of the tower 13 of the wind turbine 11 is secured to the top end of the foundation 46.

Once the installation of the wind turbine 11 to the foundation 46 is completed, a second end of a wire 48 whose first end is attached to the front of the wind-turbine supporting structure 24 from outside and a second end of a wire 49 whose first end is attached to the front of the wind-turbine supporting structure 25 from outside are pulled toward the ship 12 so that the wind-turbine supporting structure 24 is opened centered on the hinge 26 toward the left as viewed from the front and so that the wind-turbine supporting structure 25 is opened centered on the hinge 26 toward the right as viewed from the front, in other words, so that the wind-turbine supporting structures 24 and 25 are brought into the state shown in Fig. 15 from the state shown in Fig. 14. By doing so, the support rack 10 is opened.

Note that the work of opening the support rack 10 by pulling the second end of the wire 48 and the second end of the wire 49 toward the ship 12 is performed in a state in which the support rack 10 is suspended from the on-board crane 33 via the lifting balance 41 and the wires 42 so that the flange 22 is not supported by the bottom-portion support 23 (so that the weight of the wind turbine 11 is not applied on the bottom-portion support 23).

Once the wind-turbine supporting structure 24 is opened centered on the hinge 26 toward the left as viewed from the front and the wind-turbine supporting structure 25 is opened centered on the hinge 26 toward the right as viewed from the front, as shown in Fig. 15, only the support rack 10 is moved toward the ship 12 by using the on-board crane 33 and is mounted on the mounting space 34, and the support rack 10 is secured to the deck 32 of the ship 12 again by means of the fixing members (not shown), as shown in Fig. 16.

Once securing of the support rack 10, which has been retrieved into the mounting space 34, to the deck 32 is completed, the four wires 42 that hang down from the four corners of the lifting balance 41 that is suspended from the hook of the on-board crane 33 are removed from the eye plates provided at the four corners of the top surface of the support rack 10, and the lifting balance 41 is removed from the hook. Then, the jack-up legs 31 of the ship 12 are brought into a state in which the jack-up legs 31 are withdrawn from the seabed 47 (a state in which the ship 12 is jacked down), and the ship 12 is made to navigate to the next wind-turbine installation sea area (the wind-turbine installation sea area in which the foundation 46 for installing the second wind turbine 11 is installed) by being self-driven or towed in a state in which the arm of the on-board crane 33 is secured to the hull.

Subsequently, by repeating the procedures described by using Figs. 12 to 16, the support rack 10 used to transport and install the second wind turbine is retrieved into the mounting space 34 and the support rack 10 is secured to the deck 32 of the ship 12 again by means of the fixing members. Then, the four wires 42 that hang down from the four corners of the lifting balance 41 that is suspended from the hook of the on-board crane 33 are removed from the eye plates provided at the four corners of the top surface of the support rack 10, and the lifting balance 41 is removed from the hook. Subsequently, the jack-up legs 31 of the ship 12 are brought into the state in which the jack-up legs 31 are withdrawn from the seabed 47 (a state in which the ship 12 is jacked down), and the ship 12 is made to navigate to a port in which the wind turbines 11 that are assembled in advance are prepared at a wharf by being self-driven or towed in the state in which the arm of the on-board crane 33 is secured to the hull.

Once the ship 12 arrives at the port where the wind turbines 11 that are assembled in advance are prepared at the wharf and when the position thereof is set, the jack-up apparatus of the ship 12 is actuated to lower the jack-up legs 31 to the seabed 47 and to secure the footings (thus, jacking up the ship 12).

Once the jack-up work of the ship 12 is completed, the lifting balance 41 is suspended from the hook of the on-board crane 33 and the four wires 42 that hang down from the four corners of this lifting balance 41 are attached, by means of shackles, to the eye plates that are provided at the four corners of the top surface of the support rack 10 to be unloaded first. Then, the fixing members securing the support rack 10 to the deck 32 of the ship 12 are removed, and the support rack 10 is moved toward the land by using the on-board crane 33. Once unloading of this support rack 10 is completed, the four wires 42 that hang down from the four corners of the lifting balance 41 that is suspended from the hook of the on-board crane 33 are removed from the eye plates provided at the four corners of the top surface of the support rack 10.

Once the four wires 42 that hang down from the four corners of the lifting balance 41 that is suspended from the hook of the on-board crane 33 are removed from the eye plates provided at the four corners of the top surface of the support rack 10, the on-board crane 33 is turned, the lifting balance 41 is suspended from the hook of the on-board crane 33, and the four wires 42 that hang down from the four corners of this lifting balance 41 are attached, by means of the shackles, to the eye plates provided at the four corners of the top surface of the support rack 10 to be unloaded second. Then, the fixing members securing the support rack 10 to the deck 32 of the ship 12 are removed, and the support rack 10 is moved toward the land by using the on-board crane 33. Once unloading of the support rack 10 is completed, the four wires 42 that hang down from the four corners of the lifting balance 41 that is suspended from the hook of the on-board crane 33 are removed from the eye plates provided at the four corners of the top surface of the support rack 10.

Subsequently, by repeating the procedures described by using Figs. 8 to 16, two additional wind turbines will be transported and installed.

Note that the support racks 10 that are unloaded again after being used to transport the wind turbines 11 to the wind-turbine installation sea areas and to install them thereat are repeatedly used (reused) to transport new wind turbines 11 that are assembled on land in advance to the wind-turbine installation sea areas to install them thereat.

With the support rack 10 according to this embodiment, so-called assembled wind turbine installation is performed, in which the wind turbine 11 in which the assembly of the tower 13, the nacelle 14, and the turbine blades 15 has been completed is transported to and installed in the wind-turbine installation sea area in that state.

By doing so, it is possible to omit the assembly work of the wind turbine 11 at the installation sea area.

In addition, with the support rack 10 according to this embodiment, the wind turbine 11 in which the assembly of the tower 13, the nacelle 14, and the turbine blades 15 has been completed is suspended by means of the support rack 10.

By doing so, it is possible to prevent the wind turbine 11 from being damaged when performing the wind-turbine loading work on land and when performing the wind-turbine installation work at the wind-turbine installation sea area.

Furthermore, with the support rack 10 according to this embodiment, the wind-turbine supporting structures 24 and 25 are configured so as to make it possible to remove them from the wind turbine 11 in a state in which the bottom end of the tower 13 is secured to the top end of the foundation 46. Accordingly, the wind-turbine supporting structures 24 and 25 are removed from the wind turbine 11 and retrieved at the wind-turbine installation sea area.

By doing so, it is possible to repeatedly use (reuse) the retrieved support rack 10 to transport a new wind turbine 11 that is assembled on land in advance to a wind-turbine installation sea area and to install it therein, thus making it possible to reduce installation costs.

Additionally, with the support rack 10 according to this embodiment, for example, as shown in Figs. 4 and 5, the truss structures of the top-most portion positioned on the front side of the support rack 10 are formed so as to extend in the vertical direction, that is, so as to be parallel to the center axis (axis in the longitudinal direction) of the tower 13.

By doing so, it is possible to prevent the turbine blades 15 from coming into contact with the support rack 10, and thus, it is possible to prevent the turbine blades 15 from being damaged.

With the ship 12 according to the present invention, so-called assembled wind turbine installation is performed, in which the wind turbine 11 in which the assembly of the tower 13, the nacelle 14, and the turbine blades 15 has been completed is transported to and installed in the wind-turbine installation sea area in that state.

By doing so, it is possible to omit the assembly work of the wind turbine 11 at the installation sea area.

In addition, with the ship 12 according to the present invention, the two mounting spaces 34 are arranged so as to be side-by-side in the bow-to-stern direction on the starboard side, and the on-board crane 33 is disposed between the first mounting space 34 and the second mounting space 34 on the port side.

By doing so, it is possible to effectively utilize the space on the deck 32, it is possible to reduce the area of the deck 32, and it is possible to achieve size reduction of the ship 12.

In addition, it is possible to make the left-right weight balance even or substantially even when two support racks 10 and two wind turbines 11 or two support racks 10 are mounted on the mounting spaces 34, which makes it possible to minimize the ballast-water adjustment, thus making it possible to enhance the work efficiency.

Furthermore, with the ship 12 according to the present invention, the mounting spaces 34 are arranged so that the centers of the wind-turbine supporting structures 24 and 25 are positioned on the turning radius area of the on-board crane 33.

By doing so, it is possible to more effectively utilize the space on the deck 32, it is possible to further reduce the area of the deck 32, and it is possible to achieve a further size reduction of the ship 12.

Additionally, with the ship 12 according to the present invention, one of the jack-up legs 31 is disposed at the turning center line of the on-board crane 33.

By doing so, it is possible to more effectively utilize the space on the deck 32, it is possible to further reduce the area of the deck 32, and it is possible to achieve a further size reduction of the ship 12.

With the offshore-wind-turbine installing method according to the present invention, so-called assembled wind turbine installation is performed, in which the wind turbine 11 in which the assembly of the tower 13, the nacelle 14, and the turbine blades 15 has been completed is transported to and installed in the wind-turbine installation sea area.

By doing so, it is possible to omit the assembly work of the wind turbine 11 at the installation sea area.

### {Second Embodiment}

Next, a second embodiment of the present invention will be described with reference to Figs. 17 to 23.

Fig. 17 is a diagram showing, as viewed from the front, a state in which a wind turbine is accommodated in a support rack according to this embodiment, and a view taken along a plane that includes a centerline of the support rack and a centerline of the wind turbine; Fig. 18 is a front view showing the state in which the wind turbine is accommodated in the support rack according to this embodiment; Fig. 19 is a diagram showing, as viewed from above, the state in which the wind turbine is accommodated in the support rack according to this embodiment; Fig. 20 is a diagram showing, as viewed from below, the state in which the wind turbine is accommodated in the support rack according to this embodiment; Fig. 21 is a diagram for explaining the retrieval work of the support rack according to this embodiment, and is a diagram showing the support rack and the wind turbine as viewed from above; Fig. 22 is a diagram for explaining a step in which an attachable/detachable portion of a bottom-portion support according to this embodiment is retrieved, and is a diagram showing the attachable/detachable portion of the bottom-portion support as viewed from the front; and Fig. 23 is a diagram for explaining the retrieval work of the support rack according to this embodiment, and is a diagram showing the support rack and the wind turbine as viewed from the front.

This embodiment differs from the first embodiment described above in that a support rack 50 is employed instead of the support rack 10 and that the wind turbine 11 that is assembled on land in advance is transported to the wind-turbine installation sea area by being accommodated in the interior of the support rack 50 and the wind turbine 11 is installed in the foundation 46 that is installed in advance in the wind-turbine installation sea area. Because other components are the same as those of the first embodiment described above, descriptions of those components will be omitted herein.

Note that the same reference signs are assigned to members that are the same as those in the first embodiment described above.

The support rack 50 shown in Figs. 17 to 21 and Fig. 23 is a support rack that is employed when transporting the (offshore) wind turbine 11 that is assembled on land in advance to the (offshore) wind-turbine installation sea area in that state and when installing the wind turbine 11 in the foundation 46 (see Fig. 23, etc.) that is installed on the wind-turbine installation sea area in advance, and the support rack 50 is mounted on the ship 12 together with the wind turbine 11 that is assembled in advance and is transported to the wind-turbine installation sea area.

The support rack 50 has, at the top-most portion (apex) thereof, an overturning prevention support 21 that prevents the wind turbine 11 from overturning when transporting the wind turbine 11 by supporting, from the outside, a top-portion outer circumferential surface of a tower 13 of the wind turbine 11 (the wind turbine 11 in which the tower 13, a nacelle 14, and turbine blades 15 are assembled on land in advance) accommodated in the interior of the support rack 50. In addition, the support rack 50 is provided with a wind-turbine supporting structure 54 that is constituted of truss structures and that has, at a bottom portion thereof, a bottom-portion support 53, which receives the entire weight of the wind turbine 11 by supporting, from below, the flange 22 provided at a bottom portion of the tower 13 of the wind turbine 11 that is accommodated in the interior of the support rack 50 (i.e., by supporting the bottom surface of the flange 22). In addition, the support rack 50 is provided with a shutter 55 that has, at the top-most portion (apex), the overturning prevention support 21 for preventing the wind turbine 11 from overturning during wind-turbine transport and that is constituted of truss structures. The wind-turbine supporting structure 54 forms three surfaces, that is, the back surface and the two side surfaces, of the support rack 50 and the shutter 55 forms one surface on the front of the support rack 50. The wind-turbine supporting structure 54 and the shutter 55 are coupled by means of a hinge 56 that is provided at one edge of the shutter 55 in the left-to-right direction and that extends in the top-to-bottom direction (a height direction), and the shutter 55 is configured so that it can be opened and closed about the rotation center of the hinge 56.

As shown in Figs. 19 to 21, the bottom-portion support 53 is provided with a fixed portion 53a that is fixed to the wind-turbine supporting structure 54 so as to form an integrated structure with the wind-turbine supporting structure 54 and an attachable/detachable portion 53b that is formed as a separate structure from the wind-turbine supporting structure 54 and the shutter 55 and that is configured so as to be freely attachable to/detachable from the wind-turbine supporting structure 54 (to be precise, the fixed portion 53a).

In addition, as has been described by using Figs. 4 and 5, the truss structures of the top-most portion positioned on the front side of the support rack 50 are also formed so as to extend in the vertical direction, that is, so as to be parallel to the center axis (axis in the longitudinal direction) of the tower 13, as with the support rack 10, and, by doing so, the turbine blades 15 are prevented from being damaged due to contact between the turbine blades 15 and the support rack 50.

Furthermore, on truss structures that form a top surface of the support rack 50, the four wires 42 (see Fig. 22, etc.) that hang down from the four corners of the lifting balance 41 (see Fig. 22, etc.) that is suspended from a hook (not shown) of a self-driven land crane (not shown), such as a jib crane or the like, or that of the on-board crane 33 or the like, such as a jib crane or the like, which is mounted on the deck 32 of the ship 12 are attached to eye plates (not shown) provided at four corners of the top surface of the support rack 50 by means of shackles (not shown). In addition, a stage (not shown) for performing slinging work is provided on the truss structures at the top surface of the support rack 50, which is used when removing the wires 42 from the eye plates.

In the following, with reference to Figs. 21 to 23, work procedures will be described, starting from mounting the wind turbine 11, which is assembled on land in advance and which is accommodated in the support rack 50, on the ship 12 from the land side; transporting the support rack 50 and the wind turbine 11 to the wind-turbine installation sea area in that state; installing the wind turbine 11 on the foundation 46 (see Fig. 23, etc.) that is installed in the wind-turbine installation sea area in advance; and retrieving the support rack 50 in which the wind turbine 11 had been accommodated onto the ship 12.

Note that, because the work procedures from mounting the wind turbine 11, which is assembled on land in advance and which is accommodated in the support rack 50, on the ship 12 from the land side; transporting the support rack 50 and the wind turbine 11 to the wind-turbine installation sea area in that state; and securing the bottom end of the tower 13 of the wind turbine 11 to the top end of the foundation 46 that is installed in the wind-turbine installation sea area in advance are the same as those described in the first embodiment by using Figs. 8 to 13, descriptions thereof will be omitted herein.

Once installation of the wind turbine 11 on the foundation 46 is completed, the support rack 50, which is suspended from the on-board crane 33 via the lifting balance 41 and the wires 42, is slightly moved vertically downward so that the flange 22 is not supported by the bottom-portion support 53 (so that the weight of the wind turbine 11 is not applied on the bottom-portion support 53), and the support rack 50 is secured to the foundation 46 and/or the wind turbine 11 by means of fixing members (not shown). The four wires 42 that hang down from the four corners of the lifting balance 41 that is suspended from the hook of the on-board crane 33 are removed from the eye plates provided at the four corners of the top surface of the support rack 50, the on-board crane 33 is turned, and the lifting balance 41 and the wires 42 are retrieved onto the deck 32. The four wires 42 are removed from the lifting balance 41, and wires 57 that are sufficiently longer than the wires 42 are attached to the four corners of the lifting balance 41. The lifting balance 41 and the wires 57 are suspended from the hook of the on-board crane 33, the on-board crane 33 is turned, and the four wires 57 that hang down from the four corners of the lifting balance 41 are attached to eye plates provided at four corners of a portion having a rectangular shape in plan view at a top surface of the attachable/detachable portion 53b. As shown in Fig. 22, in a state in which the attachable/detachable portion 53b is suspended from the hook of the on-board crane 33 via the lifting balance 41 and the wires 57, the on-board crane 33 is turned so as to move the attachable/detachable portion 53b away from the support rack 50, as shown in Fig. 21, and thus, the lifting balance 41, the wires 57, and the attachable/detachable portion 53b are retrieved onto the deck 32. The four wires 57 are removed from the lifting balance 41, and the wires 42 are attached to the four corners of the lifting balance 41. The lifting balance 41 and the wires 42 are suspended from the hook of the on-board crane 33, the on-board crane 33 is turned, the four wires 42 that hang down from the four corners of the lifting balance 41 are attached to the eye plates provided at the four corners of the top surface of the support rack 50, and thus, a state in which the support rack 50 is suspended from the hook of the on-board crane 33 via the lifting balance 41 and the wires 42 is achieved. The fixing members securing the support rack 50 to the foundation 46 and/or the wind turbine 11 are removed.

In addition, in the case in which an auxiliary crane (not shown) is also provided on the ship, once the installation of the wind turbine 11 to the foundation 46 is completed, and when the support rack 10 is suspended from the on-board crane 33 via the lifting balance 41 and the wires 42 so that the flange 22 is not supported by the bottom-portion support 53 (so that the weight of the wind turbine 11 is not applied on the bottom-portion support 53), with the auxiliary crane (not shown), on the other hand, the wires are attached to the eye plates provided at the four corners of the portion having a rectangular shape in plan view at the top surface of the attachable/detachable portion 53b, thus retrieving the attachable/detachable portion 53b onto the deck 32, and, in addition, it is also possible to retrieve the support rack 50 by using the on-board crane 33 by releasing coupling between the support rack 50 and the flange 22. Because other aspects of the installation method are the same as the case in which an auxiliary crane is not employed, descriptions thereof will be omitted herein.

As shown in Figs. 21 and 23, for example, a second end of a wire (not shown) whose first end is attached to the front of the shutter 55 at the left side thereof is pulled so that the shutter 55 is opened centered on the hinge 56 toward the right as viewed from the front. Once the shutter 55 is opened centered on the hinge 56 toward the right as viewed from the front, as shown in Fig. 21, only the support rack 50 is moved toward the ship 12 by using the on-board crane 33 and is mounted on the mounting space 34, and the support rack 50 is secured on the deck 32 of the ship 12 again by means of the fixing members (not shown).

Because work procedures after completing retrieval of the support rack 50 to the mounting space 34 and securing of the support rack 50 on the deck 32 are the same as those of the first embodiment, descriptions thereof will be omitted herein.

Note that the support racks 50 that are unloaded again after being used to transport the wind turbines 11 to the wind-turbine installation sea areas and to install them thereat are repeatedly used (reused) to transport new wind turbines 11 that are assembled on land in advance to the wind-turbine installation sea areas to install them thereat.

With the support rack 50 according to this embodiment, so-called assembled wind turbine installation is performed, in which the wind turbine 11 in which the assembly of the tower 13, the nacelle 14, and the turbine blades 15 has been completed is transported to and installed in the wind-turbine installation sea area in that state.

By doing so, it is possible to omit the assembly work of the wind turbine 11 at the installation sea area.

In addition, with the support rack 50 according to this embodiment, the wind turbine 11 in which the assembly of the tower 13, the nacelle 14, and the turbine blades 15 has been completed is suspended by means of the support rack 50.

By doing so, it is possible to prevent the wind turbine 11 from being damaged when performing the wind-turbine loading work on land and when performing the wind-turbine installation work at the wind-turbine installation sea area.

Furthermore, with the support rack 50 according to this embodiment, the wind-turbine supporting structures 54 and 55 are configured so as to make it possible to remove them from the wind turbine 11 in a state in which the bottom end of the tower 13 is secured to the top end of the foundation 46, and thus, the wind-turbine supporting structures 54 and 55 are removed from the wind turbine 11 and retrieved at the wind-turbine installation sea area.

By doing so, it is possible to repeatedly use (reuse) the retrieved support rack 50 to transport a new wind turbine 11 that is assembled on land in advance to a wind-turbine installation sea area and to install it therein.

Additionally, with the support rack 50 according to this embodiment, for example, as shown in Figs. 4 and 5, the truss structures of the top-most portion positioned on the front side of the support rack 50 are formed so as to extend in the vertical direction, that is, so as to be parallel to the center axis (axis in the longitudinal direction) of the tower 13.

By doing so, it is possible to prevent the turbine blades 15 from coming into contact with the support rack 50, and thus, it is possible to prevent the turbine blades 15 from being damaged.

Because operational advantages of the ship 12 according to the present invention and operational advantages of the offshore-wind-turbine installing method according to the present invention are the same as those of the first embodiment described above, descriptions thereof will be omitted herein.

### {Third Embodiment}

In the following, a third embodiment of the present invention will be described with reference to Figs. 24 to 32.

Fig. 24 is a diagram showing, as viewed from the front, a state in which a wind turbine is accommodated in a support rack according to this embodiment, and a view taken along a plane that includes a centerline of the support rack and a centerline of the wind turbine; Fig. 25 is a front view showing the state in which the wind turbine is accommodated in the support rack according to this embodiment; Fig. 26 is a diagram showing, as viewed from above, the state in which the wind turbine is accommodated in the support rack according to this embodiment; Fig. 27 is a diagram showing, as viewed from below, the state in which the wind turbine is accommodated in the support rack according to this embodiment; Fig. 28 is a diagram for explaining a retrieval work of the support rack according to this embodiment, and is a diagram showing the support rack and the wind turbine as viewed from above; Fig. 29 is a diagram for explaining a step in which an attachable/detachable portion of a bottom-portion support according to this embodiment is retrieved, and is a diagram showing the attachable/detachable portion of the bottom-portion support as viewed from the front; Fig. 30 is a diagram for explaining the retrieval work of the support rack according to this embodiment and is a diagram showing the support rack and the wind turbine as viewed from the front; Fig. 31 is a diagram for explaining details of an overturning prevention support and a ring-like member according to this embodiment, and is a diagram showing the overturning prevention support and the ring-like member as viewed from above; and Fig. 32 is a diagram for explaining details of a driving mechanism according to this embodiment, and is a sectional view taken along a plane that perpendicularly intersects a centerline (axis in the longitudinal direction) of the ring-like member.

This embodiment differs from the first embodiment described above in that a support rack 70 is employed instead of the support rack 10 and that the wind turbine 11 that is assembled on land in advance is transported to the wind-turbine installation sea area by being accommodated in the interior of the support rack 70, and the wind turbine 11 is installed on the foundation 46 that is installed in advance in the wind-turbine installation sea area. Because other components are the same as those of the first embodiment described above, descriptions of those components will be omitted herein.

Note that the same reference signs are assigned to members that are the same as those in the first embodiment described above.

The support rack 70 shown in Figs. 24 to 28 and Fig. 30 is a support rack that is employed when transporting the (offshore) wind turbine 11 that is assembled on land in advance to the (offshore) wind-turbine installation sea area in that state and when installing the wind turbine 11 on the foundation 46 (see Fig. 30, etc.) that is installed in the wind-turbine installation sea area in advance, and the support rack 70 is mounted on the ship 12 together with the wind turbine 11 that is assembled in advance and is transported to the wind-turbine installation sea area.

The support rack 70 has, at the top-most portion (apex) thereof, an overturning prevention support 71 that prevents the wind turbine 11 from overturning when transporting the wind turbine by supporting, from the outside, a top-portion outer circumferential surface of a tower 13 of the wind turbine 11 (the wind turbine 11 in which the tower 13, a nacelle 14, and turbine blades 15 are assembled on land in advance) accommodated in the interior of the support rack 70. In addition, the support rack 70 is provided with a wind-turbine supporting structure 74 that has a truncated cone shape and that has, at a bottom portion thereof, a bottom-portion support 73, which receives the entire weight of the wind turbine 11 by supporting, from below, the flange 22 provided at a bottom portion of the tower 13 of the wind turbine 11 that is accommodated in the interior of the support rack 70(i.e., by supporting the bottom surface of the flange 22). The wind-turbine supporting structure 74 is provided with a plurality of (six in this embodiment) columnar members 75 that extend in the top-to-bottom direction (a height direction) and that are arranged in the circumferential direction with equal intervals and a plurality of (four in this embodiment) ring-like members 76 that extend in the circumferential direction and that have spaces therebetween in the top-to-bottom direction.

As shown in Fig. 31, the overturning prevention support 71 has an inner circumferential surface that coincides with a portion of a top-portion outer circumferential surface of the tower 13, and is also provided with a set of, that is, left and right, arms 81 that are disposed so as to hold the top-portion outer circumferential surface of the tower 13 from the left and right (both sides) and a set of, that is, left and right, actuators 82 that move these arms 81 forward and backward with respect to the tower 13.

Each ring-like member 76 is provided with an outer tube 91 in which a portion in the circumferential direction on the front side of the wind-turbine supporting structure 74 is cut out and a coupling rod 92 substantially the entirety of which is accommodated inside the outer tube 91, thus opening the cutout portion of the outer tube 91 and a portion of which is made to protrude from the outer tube 91, thus closing the cutout portion of the outer tube 91. The coupling rod 92 is driven by a coupling-rod driving mechanism 93 shown in Fig. 32. The driving mechanism 93 is provided with a rack 94 that is provided at an inner circumferential surface of the coupling rod 92 so as to extend in the circumferential direction, a pinion 95 that engages with the rack 94, and a motor 97 that makes the pinion 95, which is connected to a rotation shaft 96 of the motor 97, rotate in the forward direction and rotate in the reverse direction.

Note that the cutout portion of the outer tube 91 is provided so as to be larger than the outer diameter of the (corresponding) tower 13 that is positioned at the radially inner side of the cutout portion, in other words, as indicated by one-dot chain lines and an arrow in Fig. 31.

In addition, as shown in Fig. 31, the outer tube 91 is disposed at the radially inner side of the columnar members 75 and is joined with the columnar members 75 that are positioned on the radially outer side by means of welding.

As shown in Figs. 26 to 28, the bottom-portion support 73 is provided with a fixed portion 73a that is fixed to the wind-turbine supporting structure 74 so as to form an integrated structure with the wind-turbine supporting structure 74 and an attachable/detachable portion 73b that is formed as a separate structure from the wind-turbine supporting structure 74 and that is configured so as to be freely attachable to/detachable from the wind-turbine supporting structure 74 (to be precise, the fixed portion 73a).

In addition, as has been described by using Figs. 4 and 5, the columnar member 75 at the top-most portion positioned on the front side of the support rack 70 is formed so as to extend in the vertical direction, that is, so as to be parallel to the center axis (axis in the longitudinal direction) of the tower 13, as with the support rack 10, and, by doing so, the turbine blades 15 are prevented from being damaged due to contact between the turbine blades 15 and the support rack 70.

Furthermore, on truss structures that form a top surface of the support rack 70, the four wires 42 (see Fig. 30, etc.) that hang down from the four corners of the lifting balance 41 (see Fig. 30, etc.) that is suspended from a hook (not shown) of a self-driven land crane (not shown), such as a jib crane or the like, or that of the on-board crane 33 or the like, such as a jib crane or the like, which is mounted on the deck 32 of the ship 12, are attached to eye plates (not shown) provided at four corners of the top surface of the support rack 70 by means of shackles (not shown). In addition, a stage (not shown) for performing slinging work is provided on the truss structures that form the top surface of the support rack 70, which is used when removing the wires 42 from the eye plates.

In the following, with reference to Figs. 28 to 30, work procedures will be described, starting from mounting the wind turbine 11, which is assembled on land in advance and which is accommodated in the support rack 70, on the ship 12 from the land side; transporting the support rack 70 and the wind turbine 11 to the wind-turbine installation sea area in that state; installing the wind turbine 11 on the foundation 46 (see Fig. 30, etc.) that is installed in the wind-turbine installation sea area in advance; and retrieving the support rack 70 in which the wind turbine 11 had been accommodated onto the ship 12.

Note that, because the work procedures from mounting the wind turbine 11, which is assembled on land in advance and which is accommodated in the support rack 70, on the ship 12 from the land side; transporting the support rack 70 and the wind turbine 11 to the wind-turbine installation sea area in that state; and securing the bottom end of the tower 13 of the wind turbine 11 to the top end of the foundation 46 that is installed in the wind-turbine installation sea area in advance are the same as those described in the first embodiment by using Figs. 8 to 13, descriptions thereof will be omitted herein.

Once installation of the wind turbine 11 to the foundation 46 is completed, the support rack 70, which is suspended from the on-board crane 33 via the lifting balance 41 and the wires 42, is slightly moved vertically downward so that the flange 22 is not supported by the bottom-portion support 73 (so that the weight of the wind turbine 11 is not applied on the bottom-portion support 73), and the support rack 70 is secured to the foundation 46 and/or the wind turbine 11 by means of fixing members (not shown). The four wires 42 that hang down from the four corners of the lifting balance 41 that is suspended from the hook of the on-board crane 33 are removed from the eye plates provided at the four corners of the top surface of the support rack 70, the on-board crane 33 is turned, and the lifting balance 41 and the wires 42 are retrieved onto the deck 32. The four wires 42 are removed from the lifting balance 41, and wires 57 that are sufficiently longer than the wires 42 are attached to the four corners of the lifting balance 41. The lifting balance 41 and the wires 57 are suspended from the hook of the on-board crane 33, the on-board crane 33 is turned, and the four wires 57 that hang down from the four corners of the lifting balance 41 are attached to eye plates provided at four corners of a top surface of the attachable/detachable portion 73b. As shown in Fig. 29, in a state in which the attachable/detachable portion 73b is suspended from the hook of the on-board crane 33 via the lifting balance 41 and the wires 57, the on-board crane 33 is turned so as to move the attachable/detachable portion 73b away from the support rack 70, as shown in Fig. 28, and thus, the lifting balance 41, the wires 57, and the attachable/detachable portion 73b are retrieved onto the deck 32. The four wires 57 are removed from the lifting balance 41, and the wires 42 are attached to the four corners of the lifting balance 41. The lifting balance 41 and the wires 42 are suspended from the hook of the on-board crane 33, the on-board crane 33 is turned, the four wires 42 that hang down from the four corners of the lifting balance 41 are attached to the eye plates provided at the four corners of the top surface of the support rack 70, and thus, a state in which the support rack 70 is suspended from the hook of the on-board crane 33 via the lifting balance 41 and the wires 42 is achieved. The fixing members securing the support rack 70 to the foundation 46 and/or the wind turbine 11 are removed.

In addition, in the case in which an auxiliary crane (not shown) is provided on the ship, once the installation of the wind turbine 11 to the foundation 46 is completed, the support rack 10 is suspended from the on-board crane 33 via the lifting balance 41 and the wires 42 so that the flange 22 is not supported by the bottom-portion support 73 (so that the weight of the wind turbine 11 is not applied on the bottom-portion support 73), with the auxiliary crane (not shown), on the other hand, the wires are attached to the eye plates provided at the four corners of the portion having a rectangular shape in plan view at the top surface of the attachable/detachable portion 53b, thus retrieving the attachable/detachable portion 73b onto the deck 32. In addition, it is also possible to retrieve the support rack 70 by using the on-board crane 33 by releasing coupling portions between the support rack 70 and the flange 22. Because other aspects of the installation method are the same as the case in which an auxiliary crane is not employed, descriptions thereof will be omitted herein.

As shown in Figs. 28 and 30, the coupling-rod driving mechanisms 93 are actuated to achieve a state in which the coupling rods 92 are accommodated inside the outer tubes 91. Next, the actuators 82 are activated to accommodate rods of the arms 81 inside the actuators 82, thus achieving a state in which the restraint on the top-portion outer circumferential surface of the tower 13 by the overturning prevention support 71 is released. Once the coupling rods 92 are accommodated inside the outer tube 91 and the restraint on the top-portion outer circumferential surface of the tower 13 by the overturning prevention support 71 is also released, only the support rack 70 is moved toward the ship 12 by using the on-board crane 33 and is mounted on the mounting space 34, and the support rack 70 is secured on the deck 32 of the ship 12 again by means of the fixing members (not shown), as shown in Fig. 28.

Because work procedures after completing retrieval of the support rack 70 to the mounting space 34 and securing of the support rack 70 on the deck 32 are the same as those of the first embodiment, descriptions thereof will be omitted herein.

Note that the support racks 70 that are unloaded again after being used to transport the wind turbines 11 to the wind-turbine installation sea areas and to install them thereat are repeatedly used (reused) to transport new wind turbines 11 that are assembled on land in advance to the wind-turbine installation sea areas to install them thereat.

With the support rack 70 according to this embodiment, so-called assembled wind turbine installation is performed, in which the wind turbine 11 in which the assembly of the tower 13, the nacelle 14, and the turbine blades 15 has been completed is transported to and installed in the wind-turbine installation sea area in that state.

By doing so, it is possible to omit the assembly work of the wind turbine 11 at the installation sea area.

In addition, with the support rack 70 according to this embodiment, the wind turbine 11 in which the assembly of the tower 13, the nacelle 14, and the turbine blades 15 has been completed is suspended by means of the support rack 70.

By doing so, it is possible to prevent the wind turbine 11 from being damaged when performing the wind-turbine loading work on land and when performing the wind-turbine installation work at the wind-turbine installation sea area.

Furthermore, with the support rack 70 according to this embodiment, the wind-turbine supporting structure 74 is configured so as to make it possible to remove it from the wind turbine 11 in a state in which the bottom end of the tower 13 is secured to the top end of the foundation 46, and thus, the wind-turbine supporting structure 74 are removed from the wind turbine 11 and retrieved at the wind-turbine installation sea area.

By doing so, it is possible to repeatedly use (reuse) the retrieved support rack 70 to transport a new wind turbine 11 that is assembled on land in advance to a wind-turbine installation sea area and to install it therein.

Additionally, with the support rack 70 according to this embodiment, for example, as shown in Figs. 4 and 5, the columnar member 75 at the top-most portion positioned on the front side of the support rack 70 is formed so as to extend in the vertical direction, that is, so as to be parallel to the center axis (axis in the longitudinal direction) of the tower 13.

By doing so, it is possible to prevent the turbine blades 15 from coming into contact with the support rack 70, and thus, it is possible to prevent the turbine blades 15 from being damaged.

Because operational advantages of the ship 12 according to the present invention and operational advantages of the offshore-wind-turbine installing method according to the present invention are the same as those of the first embodiment described above, descriptions thereof will be omitted herein.

Note that the present invention is not limited to the embodiments described above, and it is also possible to employ forms in which appropriate modifications and alterations are incorporated as needed.

For example, in the descriptions of the embodiments described above, the wind turbine 11 in which the assembly of the tower 13, the nacelle 14, and the turbine blades 15 has been completed is transported to and installed in the wind-turbine installation sea area in that state; however, the present invention is not limited thereto. The present invention can also be applied to forms in which the wind turbine 11 in which the assembly of the tower 13 and the nacelle 14 has been completed is transported to and installed in the wind-turbine installation sea area in that state, and in which the turbine blades 15 are assembled in the wind-turbine installation sea area.

In addition, in the embodiments described above, the case in which the two mounting spaces 34 are arranged so as to be side-by-side in the bow-to-stern direction on the starboard side (first side of the ship), and the on-board crane 33 is disposed between the first mounting space 34 and the second mounting space 34 on the port side (second side of the ship) has been described as a specific example; however, the present invention is not limited thereto. The two mounting spaces 34 may be arranged so as to be side-by-side in the bow-to-stern direction on the port side (first side of the ship), and the on-board crane 33 may be disposed between the first mounting space 34 and the second mounting space 34 on the starboard side (second side of the ship).

Furthermore, it is more suitable if a cushioning material (not shown) formed of a rubber material or the like is provided at an inner circumferential surface of the overturning prevention support 21 or 71 that comes into contact with the top-portion outer circumferential surface of the tower 13.

By doing so, it is possible to prevent the tower 13 from being damaged due to contact between the overturning prevention support 21 or 71 and the top-portion outer circumferential surface of the tower 13.

### {Reference Signs List}

- 10: support rack
- 11: wind turbine
- 12: ship (offshore-wind-turbine installing ship)
- 13: tower
- 14: nacelle
- 15: turbine blade
- 21: overturning prevention support
- 22: flange
- 23: bottom-portion support
- 24: wind-turbine supporting structure
- 25: wind-turbine supporting structure
- 31: jack-up leg
- 32: deck
- 33: on-board crane
- 34: mounting space
- 46: foundation
- 50: support rack
- 53: bottom-portion support
- 54: wind-turbine supporting structure
- 55: wind-turbine supporting structure
- 70: support rack
- 71: overturning prevention support
- 73: bottom-portion support
- 74: wind-turbine supporting structure

## Claims

1. An offshore-wind-turbine installing ship (12) comprising a support rack (10) and having two mounting spaces (34) that allow the support rack (10) to be mounted and secured to the mounting spaces (34) and that are arranged side-by-side in a bow-to-stern direction on a deck on a first side of the ship (12), the support rack (10) being configured for transporting a wind turbine (11) made by assembling a tower (13), a nacelle (14), and turbine blades (15) or a wind turbine (11) made by assembling a tower (13) and a nacelle (14) to a wind-turbine installation sea area in a state in which the wind turbine (11) is accommodated in the support rack (10), and for installing the wind turbine (11) on a foundation (46) installed in the wind-turbine installation sea area, wherein the support rack (10) comprises a pair of left and right wind-turbine supporting structures (24, 25) that comprises:
an overturning prevention support (21) for supporting an outer circumferential surface of the tower to prevent the wind turbine from overturning, a bottom-portion support (23) configured to support a flange (22) provided in the accommodated tower (13) at a position apart from the bottom end surface of the accommodated tower so as to receive the weight of the wind turbine (11), and
wherein an on-board crane (33) is disposed on the deck (32) on a second side of the ship (12) between the two mounting spaces (34),
wherein one of the wind-turbine supporting structures (24) positioned on a first side of the support rack (10) and the other of the wind-turbine supporting structures (25) positioned on a second side of the support rack (10) are coupled by means of a hinge (26) that is provided at a surface being in contact with the first side and the second side where the wind-turbine supporting structures (24, 25) are each provided and that extends in a vertical direction, and wherein the wind-turbine supporting structures (24, 25) are configured so as to be capable of being opened and closed around a rotation center of the hinge (26) and being removed from the wind turbine (11) in a state in which the tower (13) is installed in the foundation (46).

2. The offshore-wind-turbine installing ship (12) according to Claim 1, wherein a top-most portion of the wind-turbine supporting structure (24, 25) is formed so that the top-most portion extends in the vertical direction and that the top-most portion is parallel to an axis of the tower (13) in its longitudinal direction.

3. The offshore-wind-turbine installing ship (12) according to any one of Claims 1 to 2, wherein the mounting spaces (34) are arranged so that a center of the wind-turbine supporting structure is positioned on a turning radius area of the on-board crane (33).

4. The offshore-wind-turbine installing ship (12) according to any one of Claims 1 to 3, wherein
the ship (12) is configured as a jack-up ship that is provided with a jack-up apparatus having a plurality of jack-up legs (31) which can be lowered to a seabed (47) to secure footings of the ship (12) at an offshore location, and
at least one of the jack-up legs (31) is disposed on a turning-center position of the on-board crane (33).

5. An offshore-wind-turbine installing method comprising:
transporting a wind turbine (11) in which a tower (13), a nacelle (14), and turbine blades (15) are assembled, or a wind turbine (11) in which a tower (13) and a nacelle (14) are assembled, to a wind-turbine installation sea area in a state in which the wind turbine (11) is accommodated in a support rack (10, 50, 70) mounted and secured to one of two support rack mounting spaces (34) that are arranged side-by-side in a bow-to-stern direction on a deck on a first side of an offshore-wind-turbine installing ship (12);
moving the wind turbine (11) and the support rack (10,50,70) toward a foundation (46) installed in the wind-turbine installation sea area by using an on-board crane (33) disposed between the two mounting spaces (34) on the deck (32) on a second side of the ship (12);
securing a bottom end of the tower (11) to a top end of the foundation (46) when the wind turbine (11) is supported by the support rack (10,50,70); and
separating the support rack (40,50,70) from the wind turbine (11) in the state in which the bottom end of the tower (13) is installed in the top end of the foundation (46) and retrieving the support rack (10).

## Patentansprüche

1. Schiff zur Installation von Offshore-Windkraftanlagen (12), das eine Stützkonstruktion (10) umfasst und zwei Montageräume (34) aufweist, die es erlauben, die Stützkonstruktion (10) an den Montageräumen (34) zu montieren und zu sichern, und die nebeneinander in einer Bug-Heck-Richtung auf einem Deck auf einer ersten Seite des Schiffes (12) angeordnet sind, wobei die Stützkonstruktion (10) dafür konfiguriert ist, eine Windkraftanlage (11), die durch den Zusammenbau eines Mastes (13), einer Gondel (14) und von Rotorblättern (15) hergestellt wird, oder eine Windkraftanlage (11), die durch den Zusammenbau eines Mastes (13) und einer Gondel (14) hergestellt wird, zu einem Windkraftanlageninstallationsbereich auf See zu transportieren, während die Windkraftanlage (11) in der Stützkonstruktion (10) aufgenommen ist, und die Windkraftanlage (11) auf einem Fundament (46) zu installieren, das in dem Windkraftanlageninstallationsbereich auf See installiert ist, wobei die Stützkonstruktion (10) ein Paar linker und rechter Windkraftanlagenstützkonstruktionen (24, 25) umfasst, das umfasst:
eine Umsturz-Verhütungsstütze (21) zum Stützen einer Außenumfangsfläche des Mastes, um zu verhindern, dass die Windkraftanlage umstürzt,
eine Bodenabschnittstütze (23), die dafür konfiguriert ist, einen Flansch (22), der in dem aufgenommenen Mast (13) an einer Position angeordnet ist, die von der Unterendfläche des aufgenommenen Mastes entfernt liegt, so zu stützen, dass das Gewicht der Windkraftanlage (11) getragen wird, und
wobei ein Bordkran (33) auf dem Deck (32) auf einer zweiten Seite des Schiffes (12) zwischen den zwei Montageräumen (34) angeordnet ist,
wobei eine der Windkraftanlagenstützstrukturen (24), die auf einer ersten Seite der Stützkonstruktion (10) positioniert ist, und die andere der Windkraftanlagenstützstrukturen (25), die auf einer zweiten Seite der Stützkonstruktion (10) positioniert ist, mittels eines Scharniers (26) gekoppelt sind, das an einer Fläche angeordnet ist, die mit der ersten Seite und der zweite Seite, wo die Windkraftanlagenstützstrukturen (24, 25) jeweils angeordnet sind, in Kontakt steht, und das sich in einen vertikalen Richtung erstreckt, und wobei die Windkraftanlagenstützstrukturen (24, 25) so konfiguriert sind, dass sie um einen Drehmittelpunkt des Scharniers (26) herum geöffnet und geschlossen werden können und von der Windkraftanlage (11) angenommen werden können, während der Mast (13) in dem Fundament (46) installiert wird.

2. Schiff zur Installation von Offshore-Windkraftanlagen (12) nach Anspruch 1, wobei ein oberster Abschnitt der Windkraftanlagenstützstruktur (24, 25) so ausgebildet ist, dass sich der oberste Abschnitt in der vertikalen Richtung erstreckt und dass der oberste Abschnitt parallel zu einer Achse des Mastes (13) in seiner Längsrichtung verläuft.

3. Schiff zur Installation von Offshore-Windkraftanlagen (12) nach einem der Ansprüche 1 bis 2, wobei die Montageräume (34) so angeordnet sind, dass eine Mitte der Windkraftanlagenstützstruktur in einem Drehradiusbereich des Bordkrans (33) positioniert ist.

4. Schiff zur Installation von Offshore-Windkraftanlagen (12) nach einem der Ansprüche 1 bis 3, wobei
das Schiff (12) als ein Hubschiff konfiguriert ist, das mit einer Hubvorrichtung ausgestattet ist, die mehrere Hubbeine (31) aufweist, die auf einen Meeresboden (47) abgesenkt werden können, um den Halt des Schiffes (12) an einem Offshore-Standort zu sichern, und
mindestens eines der Hubbeine (31) in einer Drehmittelpunktposition des Bordkranes (33) angeordnet ist.

5. Verfahren zur Installation von Offshore-Windkraftanlagen, umfassend:
Transportieren einer Windkraftanlage (11), bei der ein Mast (13), eine Gondel (14) und Rotorblätter (15) zusammengebaut werden, oder einer Windkraftanlage (11), bei der ein Mast (13) und eine Gondel (14) zusammengebaut werden, zu einem Windkraftanlageninstallationsbereich auf See, während die Windkraftanlage (11) in einer Stützkonstruktion (10, 50, 70) aufgenommen ist, die an einer von zwei Stützkonstruktions-Montageräumen (34) montiert und gesichert ist, die nebeneinander in einer Bug-Heck-Richtung auf einem Deck auf einer ersten Seite eines Schiffes zur Installation von Offshore-Windkraftanlagen (12) angeordnet sind,
Bewegen der Windkraftanlage (11) und der Stützkonstruktion (10, 50, 70) in Richtung eines Fundaments (46), das in dem Windkraftanlageninstallationsbereich auf See installiert ist, mit Hilfe eines Bordkranes (33), der zwischen den zwei Montageräumen (34) auf dem Deck (32) auf einer zweiten Seite des Schiffes (12) angeordnet ist,
Sichern eines unteren Endes des Mastes (11) an einem oberen Ende des Fundaments (46), wenn die Windkraftanlage (11) durch die Stützkonstruktion (10, 50, 70) gestützt wird, und
Trennen der Stützkonstruktion (40, 50, 70) von der Windkraftanlage (11), sobald das untere Ende des Mastes (13) im oberen Ende des Fundaments (46) installiert ist, und Zurückholen der Stützkonstruktion (10).

## Revendications

1. Navire d'installation de turbine éolienne offshore (12) comprenant un bâti de support (10) et ayant deux espaces de montage (34) qui permettent au bâti de support (10) d'être monté et fixé sur les espaces de montage (34) et qui sont agencés côte à côte dans une direction de la proue vers la poupe sur un pont sur un premier côté du navire (12), le bâti de support (10) étant configuré pour transporter une turbine éolienne (11) réalisée en assemblant une tour (13), une nacelle (14) et des pales de turbine (15) ou une turbine éolienne (11) réalisée en assemblant une tour (13) et une nacelle (14) sur une zone en mer d'installation de turbine éolienne dans un état dans lequel la turbine éolienne (11) est logée dans le bâti de support (10) et pour installer la turbine éolienne (11) sur une fondation (46) installée dans la zone en mer d'installation de turbine éolienne,
dans lequel :
le bâti de support (10) comprend une paire de structures de support de turbine éolienne gauche et droite (24, 25) qui comprend :
un support de prévention de retournement (21) pour supporter une surface circonférentielle externe de la tour pour empêcher le retournement de la turbine éolienne,
un support de partie inférieure (23) configuré pour supporter une bride (22) prévue dans la tour (13) logée dans une position à distance de la surface d'extrémité inférieure de la tour logée afin de recevoir le poids de la turbine éolienne (11), et
dans lequel une grue embarquée (33) est disposée sur le pont (32) sur un second côté du navire (12) entre les deux espaces de montage (34),
dans lequel l'une des structures de support de turbine éolienne (24) positionnée sur un premier côté du bâti de support (10) et l'autre des structures de support de turbine éolienne (25) positionnée sur un second côté du bâti de support (10) sont couplées au moyen d'une charnière (26) qui est prévue sur une surface qui est en contact avec le premier côté et le second côté où les structures de support de turbine éolienne (24, 25) sont chacune prévues et qui s'étend dans une direction verticale, et
dans lequel les structures de support de turbine éolienne (24, 25) sont configurées afin de pouvoir s'ouvrir et se fermer autour d'un centre de rotation de la charnière (26) et être retirées de la turbine éolienne (11) dans un état dans lequel la tour (13) est installée dans la fondation (46).

2. Navire d'installation de turbine éolienne offshore (12) selon la revendication 1, dans lequel la partie la plus haute de la structure de support de turbine éolienne (24, 25) est formée de sorte que la partie la plus haute s'étend dans la direction verticale et en ce que la partie la plus haute est parallèle à un axe de la tour (13) dans sa direction longitudinale.

3. Navire d'installation de turbine éolienne offshore (12) selon l'une quelconque des revendications 1 à 2, dans lequel les espaces de montage (34) sont agencés de sorte qu'un centre de la structure de support de turbine éolienne est positionné sur une zone de rayon de rotation de la grue embarquée (33).

4. Navire d'installation de turbine éolienne offshore (12) selon l'une quelconque des revendications 1 à 3, dans lequel :
le navire (12) est configuré comme un navire autoélévateur qui est prévu avec un appareil autoélévateur ayant une pluralité de pattes autoélévatrices (31) qui peuvent être abaissées sur un lit marin (47) pour fixer les fondations du navire (12) à un emplacement offshore, et
au moins l'une des pattes autoélévatrices (31) est disposée sur une position de centre de rotation de la grue embarquée (33).

5. Procédé d'installation de turbine éolienne offshore comprenant les étapes suivantes :
transporter une turbine éolienne (11) dans laquelle une tour (13), une nacelle (14) et des pales de turbine (15) sont assemblées, ou bien une turbine éolienne (11) dans laquelle une tour (13) et une nacelle (14) sont assemblées, sur une zone en mer d'installation de turbine éolienne dans un état dans lequel la turbine éolienne (11) est logée dans un bâti de support (10, 50, 70) monté et fixé sur l'un des deux espaces de montage (34) de bâti de support qui sont agencés côte à côte dans une direction de la proue vers la poupe sur un pont sur un premier côté d'un navire d'installation de turbine éolienne offshore (12) ;
déplacer la turbine éolienne (11) et le bâti de support (10, 50, 70) vers une fondation (46) installée dans la zone en mer d'installation de turbine éolienne en utilisant une grue embarquée (33) disposée entre les deux espaces de montage (34) sur le pont (32) sur un second côté du navire (12) ;
fixer une extrémité inférieure de la tour (11) à une extrémité supérieure de la fondation (46) lorsque la turbine éolienne (11) est supportée par le bâti de support (10, 50, 70) ; et
séparer le bâti de support (40, 50, 70) de la turbine éolienne (11) dans un état dans lequel l'extrémité inférieure de la tour (13) est installée dans l'extrémité supérieure de la fondation (46) et récupérer le bâti de support (10).
